# EUROPEAN PATENT APPLICATION

(11) **EP 4 050 567 A1**
(43) Date of publication of application: **31.08.2022**
(21) Application number: 20878069.2
(22) Date of filing: 17.08.2020
(51) Int. Cl.: G06T 15/04

(54) **INFORMATION PROCESSING DEVICE, 3D DATA GENERATION METHOD, AND PROGRAM**

(30) Priority: 21.10.2019 JP 2019192184; 28.02.2020 JP 2020034085
(71) Applicant: Sony Group Corporation, Tokyo 108-0075 (JP)
(72) Inventor: SUGANO, Hisako, Tokyo 108-0075 (JP); HIROTA, Yoichi, Tokyo 108-0075 (JP); IZUMI, Nobuaki, Tokyo 108-0075 (JP); OI, Junji, Tokyo 108-0075 (JP)
(74) Representative: D Young & Co LLP
(86) International application number: PCT/JP2020/030938
(87) International publication number: WO 2021/079592

(57) **Abstract**

When an operation detection unit (31) (detection unit) of a mobile terminal (30a) (information processing apparatus) detects an operation instruction given when observing a 3D model (90M) (3D object), a texture information selection unit (33) (decision unit) selects which texture information (Ta or Tb) that expresses the texture of the 3D model (90M) in a plurality of different formats acquired by a 3D model acquisition unit (32) to use when drawing the 3D model (90M) according to the operation instruction detected by the operation detection unit (31). Then, a rendering processing unit (34) (drawing unit) renders the texture information (Ta or Tb) selected by the texture information selection unit (33) on the 3D model (90M) reconstructed on the basis of mesh information (M) (shape information) so as to draw the 3D model (90M).

## Description

### Field

The present disclosure relates to an information processing apparatus, a 3D data generation method, and a program, and more particularly to an information processing apparatus, a 3D data generation method, and a program capable of changing a data size necessary for rendering.

### Background

Conventionally, a method of using information obtained by sensing an actual 3D space, for example, a multi-view video obtained by capturing an image of a subject from different viewpoints to generate a 3D object in a viewing space so as to generate a video as if the object exists in the viewing space (also referred to as volumetric video) has been proposed (for example, Patent Literature 1).

### Citation List

### Patent Literature

Patent Literature 1: WO 2017/082076 A

### Summary

### Technical Problem

However, Patent Literature 1 does not refer to the data size at the time of rendering.

The present disclosure proposes an information processing apparatus, a 3D data generation method, and a program capable of changing the data size necessary for rendering.

### Solution to Problem

To solve the problems described above, an information processing apparatus according to an embodiment of the present disclosure includes: a decision unit that decides whether to use first texture information expressing a surface of a 3D object in a first format or second texture information expressing the surface of the 3D object in a second format different from the first texture information to draw all or some of the 3D objects when drawing the 3D objects; and a drawing unit that draws the 3D object using shape information indicating a surface shape of the 3D object and texture information decided by the decision unit.

Also, an information processing apparatus according to an embodiment of the present disclosure includes: a storage unit that stores shape information indicating a surface shape of a 3D object, first texture information expressing a surface of the 3D object in a first format, and texture information expressed with second texture information expressing the surface of the 3D object in a second format different from the first texture information; a decision unit that decides which texture information in a plurality of different formats stored by the storage unit to transmit to a drawing apparatus when observing the 3D object output from the drawing apparatus that draws the 3D object; and a transmission unit that transmits the shape information and the texture information decided by the decision unit to the drawing apparatus.

### Brief Description of Drawings

FIG. 1 is a block diagram illustrating an example of a system configuration of an information processing system of a first embodiment.
FIG. 2 is a diagram illustrating an outline of a flow in which a server apparatus generates a 3D model of a subject.
FIG. 3 is a diagram explaining the content of data necessary for expressing a 3D model.
FIG. 4 is a hardware block diagram illustrating an example of a hardware configuration of a mobile terminal of the first embodiment.
FIG. 5 is a hardware block diagram illustrating an example of a hardware configuration of a server apparatus of the first embodiment.
FIG. 6 is a functional block diagram illustrating an example of a functional configuration of the information processing system of the first embodiment.
FIG. 7 is a diagram illustrating an example of data transmitted from the server apparatus to the mobile terminal in the first embodiment.
FIG. 8 is a diagram explaining texture information used when the mobile terminal of the first embodiment performs rendering.
FIG. 9 is a flowchart illustrating an example of a flow of processing performed by the mobile terminal of the first embodiment.
FIG. 10 is a diagram explaining texture information used when a mobile terminal of a variation example of the first embodiment performs rendering.
FIG. 11 is a flowchart illustrating an example of a flow of processing performed by the mobile terminal of the variation example of the first embodiment.
FIG. 12 is a block diagram illustrating an example of a system configuration of an information processing system of a second embodiment.
FIG. 13 is a functional block diagram illustrating an example of a functional configuration of the information processing system of the second embodiment.
FIG. 14 is a diagram illustrating an example of processing performed by the information processing system of the second embodiment.
FIG. 15 is a flowchart illustrating an example of a flow of processing performed by the information processing system of the second embodiment.
FIG. 16 is a diagram illustrating an example of processing performed by variation example (1) of the information processing system of the second embodiment.
FIG. 17 is a diagram illustrating an example of processing performed by variation example (2) of the information processing system of the second embodiment.
FIG. 18 is a diagram explaining an example of a data structure of a 3D model included in an information processing system of a third embodiment.
FIG. 19 is a functional block diagram illustrating an example of a functional configuration of an information processing system of a fourth embodiment.
FIG. 20 is a diagram illustrating an example of a flow of processing in which the information processing system of the fourth embodiment performs rendering of a 3D object.
FIG. 21 is a diagram illustrating an example in which one 3D object is drawn with different pieces of texture information.
FIG. 22 is a flowchart illustrating an example of a flow of processing performed by the information processing system of the fourth embodiment.
FIG. 23 is a flowchart illustrating an example of a flow of texture selection processing performed by a mobile terminal of the fourth embodiment.
FIG. 24 is a flowchart illustrating an example of a flow of rendering processing performed by the mobile terminal of the fourth embodiment.
FIG. 25 is a diagram explaining an operation of an information processing system of a fifth embodiment.
FIG. 26 is a flowchart illustrating an example of a flow of processing performed by the information processing system of the fifth embodiment.

### Description of Embodiments

The embodiments of the present disclosure will be described below in detail on the basis of the drawings. Note that, in each embodiment described below, the same parts are designated by the same reference numerals, and duplicate description will be omitted.

Further, the present disclosure will be described according to the item order described below.
1. First embodiment
   1-1. Description of prerequisites - generation of 3D model
   1-2. Description of prerequisites - data structure of 3D model
   1-3. Description of hardware configuration of mobile terminal
   1-4. Description of hardware configuration of server apparatus
   1-5. Description of functional configuration of server apparatus and mobile terminal
   1-6. Description of data transmitted from server apparatus to mobile terminal
   1-7. Description of texture information used by mobile terminal when performing rendering
   1-8. Description of flow of processing performed by mobile terminal
   1-9. Effect of the first embodiment
   1-10. Description of variation example of the first embodiment
   1-11. Description of flow of processing performed by mobile terminal in variation example of the first embodiment
   1-12. Effect of variation example of the first embodiment
2. Second embodiment
   2-1. Description of functional configuration of server apparatus and mobile terminal
   2-2. Description of operation of information processing system
   2-3. Description of flow of processing performed by information processing system
   2-4. Effect of the second embodiment
   2-5. Description of variation example (1) of the second embodiment
   2-6. Description of variation example (2) of the second embodiment
3. Third embodiment
4. Fourth embodiment
   4-1. Description of functional configuration of information processing system
   4-2. Description of processing performed by information processing system
   4-3. Description of flow of processing performed by information processing system
   4-4. Description of flow of texture selection processing performed by mobile terminal
   4-5. Description of flow of rendering processing performed by mobile terminal
   4-6. Effect of the fourth embodiment
5. Fifth embodiment
   5-1. Description of functional configuration of information processing system
   5-2. Description of processing performed by information processing system
   5-3. Description of flow of processing performed by information processing system
   5-4. Effect of the fifth embodiment

### (1. First embodiment)

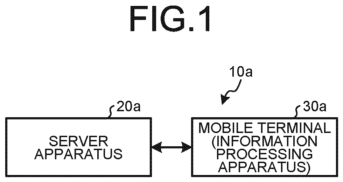

FIG. 1 is a block diagram illustrating an example of a system configuration of an information processing system of a first embodiment. An information processing system 10a includes a server apparatus 20a and a mobile terminal 30a. The information processing system 10a, which is the first embodiment, is a system in which the mobile terminal 30a, which is an example of the information processing apparatus of the present disclosure, receives a 3D model of the subject transmitted from the server apparatus 20a, and renders a virtual image observed from a virtual viewpoint freely set by the user and displays the image on the mobile terminal 30a.

That is, the server apparatus 20a generates and stores a 3D model 90M of the subject. Further, the server apparatus 20a transmits the 3D model 90M of the subject to the mobile terminal 30a in response to a request from the mobile terminal 30a.

Further, the mobile terminal 30a acquires the 3D model of the subject from the server apparatus 20a. Further, the mobile terminal 30a sets a virtual viewpoint for observing the 3D model of the subject on the basis of the user's setting operation. Furthermore, the mobile terminal 30a renders the 3D model of the subject by generating a virtual image observed from the set virtual viewpoint.

Hereinafter, necessary prerequisites will be described before the details of the information processing system 10a are described.

### [1-1. Description of prerequisites - generation of 3D model]

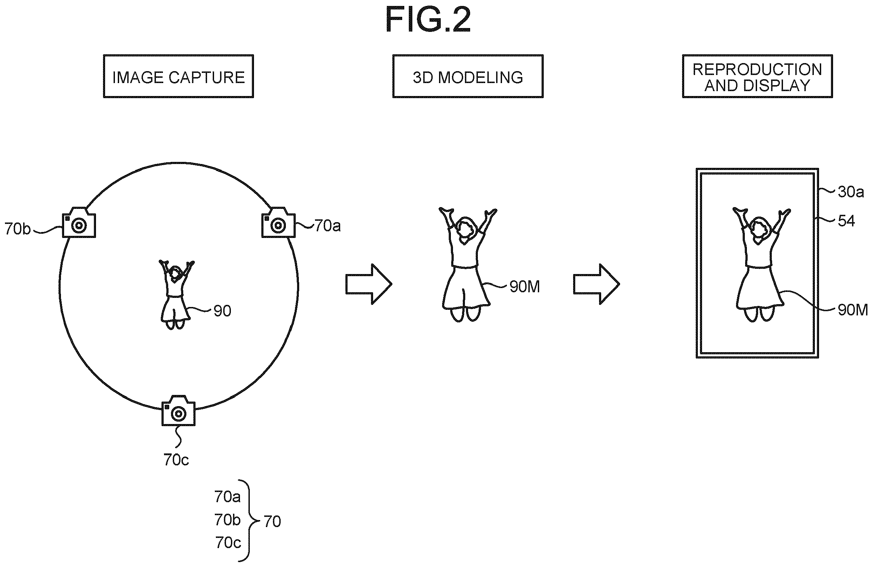

FIG. 2 is a diagram illustrating an outline of a flow in which a server apparatus generates a 3D model of a subject.

As illustrated in FIG. 2, the 3D model 90M of a subject 90 is made through image capture of the subject 90 by a plurality of cameras 70 (70a, 70b, 70c) and processing of generating the 3D model 90M having 3D information of the subject 90 by 3D modeling.

Specifically, as illustrated in FIG. 2, the plurality of cameras 70 is arranged to face inward outside the subject 90 so as to surround the subject 90 existing in the real world. FIG. 2 illustrates an example in which the number of cameras is three, and the cameras 70a, 70b, and 70c are arranged around the subject 90. Note that, in FIG. 2, the subject 90 is a person who performs a predetermined operation. Further, the number of cameras 70 is not limited to three, and a larger number of imaging apparatuses may be provided.

3D modeling is performed using multiple viewpoint images subjected to synchronous volumetric capturing by the three cameras 70a, 70b, and 70c from different viewpoints, and the 3D model 90M of the subject 90 is generated in units of video frames of the three cameras 70a, 70b, and 70c.

The 3D model 90M is a model having 3D information of the subject 90. Note that the 3D model 90M is an example of the 3D object in the present disclosure. The 3D model 90M has shape information indicating the surface shape of the subject 90 in the form of mesh data called, for example, a polygon mesh, which is expressed by the connection between a vertex and a vertex. Further, the 3D model 90M has texture information indicating the surface state of the subject 90 corresponding to each polygon mesh. Note that the format of the information of the 3D model 90M is not limited to these, and information in another format may be possible (see the third embodiment).

When reconstructing the 3D model 90M, so-called texture mapping is performed by pasting a texture indicating the color, pattern, or texture of the mesh according to the mesh position. For texture mapping, in order to improve the reality of the 3D model 90M, it is desirable to paste a texture dependent on the viewpoint position (view dependent: hereinafter referred to as VD). Thus, when an image of the 3D model 90M is captured from an arbitrary virtual viewpoint, the texture changes according to the viewpoint position, so that a higher image quality virtual image can be obtained. However, since the amount of calculation increases, a texture not dependent on the line-of-sight position (view independent: hereinafter referred to as VI) may be pasted on the 3D model 90M.

Read content data including the 3D model 90M is transmitted to and reproduced by the mobile terminal 30a, which is an apparatus on the reproduction side. The content data including the 3D model 90M is reproduced, the 3D model 90M is rendered, and a 3D shape video is displayed on a viewing device of the user (viewer).

In the example of FIG. 2, the mobile terminal 30a such as a smartphone or a tablet terminal is used as the viewing device. That is, an image including the 3D model 90M is displayed on a liquid crystal display 54 of the mobile terminal 30a.

### [1-2. Description of prerequisites - data structure of 3D model]

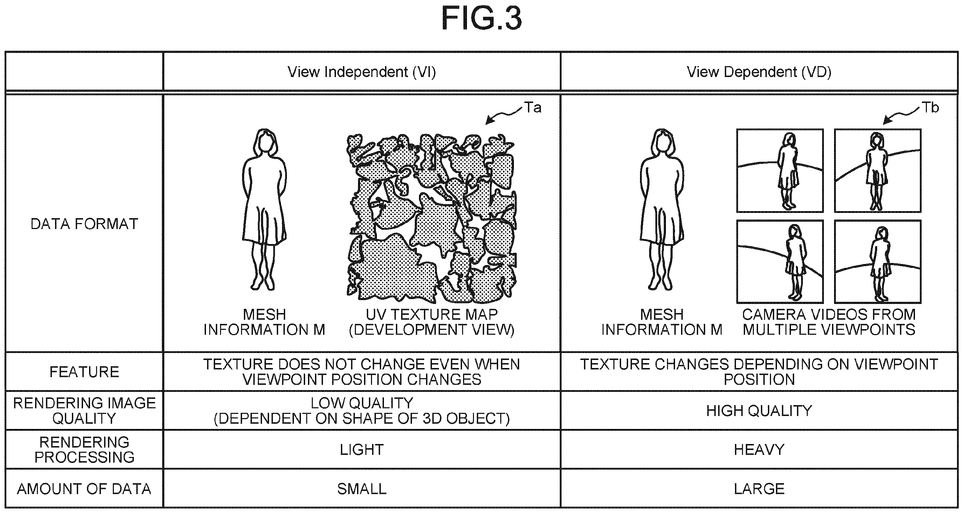

Next, the content of data necessary for expressing the 3D model 90M is described with reference to FIG. 3. FIG. 3 is a diagram explaining the content of data necessary for expressing a 3D model.

The 3D model 90M of the subject 90 is expressed by mesh information M indicating the shape of the subject 90 and texture information T indicating the texture (color, pattern, or the like) of the surface of the subject 90.

The mesh information M indicates the shape of the 3D model 90M by connecting some parts on the surface of the 3D model 90M as vertices (polygon mesh). Further, instead of the mesh information M, depth information Dp (not illustrated) indicating the distance from the viewpoint position for observing the subject 90 to the surface of the subject 90 may be used. The depth information Dp of the subject 90 is calculated on the basis of, for example, the parallax of the same region of the subject 90 detected from an image captured by an adjacent imaging apparatus. Note that the depth information Dp may be obtained by installing a sensor provided with a distance measuring mechanism in the vicinity of the imaging apparatus and measuring the distance to the subject 90 with the sensor. Here, the mesh information M and the depth information Dp are examples of the shape information in the present disclosure.

In the present embodiment, two types of data are used as the texture information T. One is texture information Ta not dependent on the viewpoint position (VI) for observing the 3D model 90M. The texture information Ta is data in which the texture of the surface of the 3D model 90M is stored in the form of a development view such as a UV texture map illustrated in FIG. 3. That is, the texture information Ta is data not dependent on the viewpoint position. For example, when the 3D model 90M is a person wearing clothes, a UV texture map including the pattern of the clothes and the skin and hair of the person is prepared as the texture information Ta. Then, the 3D model 90M can be drawn by pasting the texture information Ta corresponding to the mesh information M on the surface of the mesh information M indicating the 3D model 90M (VI rendering). Then, at this time, even when the observation position of the 3D model 90M changes, the same texture information Ta is pasted on the mesh indicating the same region. Thus, VI rendering using the texture information Ta is executed by pasting the texture information Ta of the clothes worn by the 3D model 90M on all meshes indicating the parts of the clothes, and therefore generally the data size is small and the calculation load of the rendering processing is light. However, since the pasted texture information Ta is uniform and the texture does not change even when the observation position is changed, the quality of the texture is generally low. Note that the texture information Ta is an example of the first texture information in the present disclosure.

The other texture information T is texture information Tb dependent on the viewpoint position (VD) for observing the 3D model 90M. The texture information Tb is expressed by a set of images obtained by observing the subject 90 from multiple viewpoints. That is, the texture information Ta is data dependent on the viewpoint position. Specifically, when the subject 90 is observed by N cameras, the texture information Tb is expressed by N images simultaneously captured by each camera. Then, when the texture information Tb is rendered on an arbitrary mesh of the 3D model 90M, all the regions corresponding to the corresponding mesh are detected from the N images. Then, the textures reflected in each of the plurality of detected regions are weighted and pasted on the corresponding mesh. As described above, VD rendering using the texture information Tb generally has a large data size and a heavy calculation load in the rendering processing. However, since the pasted texture information Tb changes according to the observation position, the quality of the texture is generally high. Note that the texture information Tb is an example of the second texture information in the present disclosure.

The subject 90, which is the basis of the 3D model 90M, generally moves over time. Therefore, the generated 3D model 90M also changes over time. That is, the mesh information M, the texture information Ta, and the texture information Tb described above generally form time-series data that changes over time.

In the present embodiment, the texture information Ta and the texture information Tb are used properly on the basis of operation instructions (observation direction, changes in observation direction, observation range, or the like) given by the user when observing the 3D model 90M so as to perform high image quality rendering while reducing the data size necessary for rendering. Details will be described below.

### [1-3. Description of hardware configuration of mobile terminal]

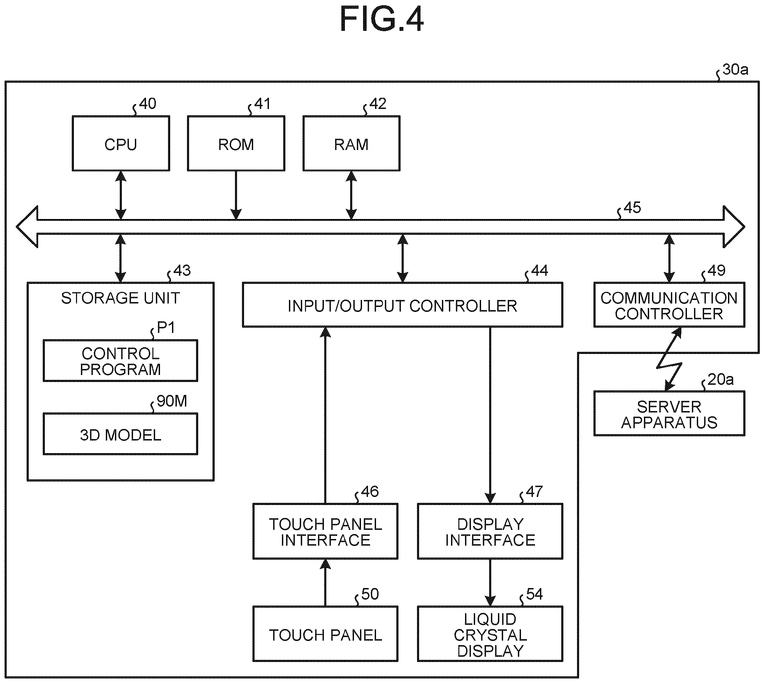

Next, the hardware configuration of the mobile terminal 30a constituting the information processing system 10a will be described with reference to FIG. 4. FIG. 4 is a hardware block diagram illustrating an example of a hardware configuration of a mobile terminal of the first embodiment.

The mobile terminal 30a has a configuration in which a central processing unit (CPU) 40, a read only memory (ROM) 41, a random access memory (RAM) 42, a storage unit 43, and an input/output controller 44 are connected by an internal bus 45.

The CPU 40 controls the overall operation of the mobile terminal 30a by loading a control program P1 stored in the storage unit 43 and various data files stored in the ROM 41 on the RAM 42 and executing the program and files. That is, the mobile terminal 30a has the configuration of a general computer that operates by the control program P1. Note that the control program P1 may be provided via a wired or wireless transmission medium such as a local area network, the Internet, or digital satellite broadcasting. Further, the mobile terminal 30a may execute a series of processing by hardware. Note that the control program P1 executed by the CPU 40 may be a program that is processed in time series according to the order described in the present disclosure, or may be a program that is processed in parallel or at a necessary timing such as when a call is made.

The storage unit 43 is configured by, for example, a flash memory, and stores the control program P1 executed by the CPU 40 and the 3D model 90M acquired from the server apparatus 20a. Note that the 3D model 90M is a specific subject 90 for which the mobile terminal 30a has given an instruction to the server apparatus 20a, that is, the 3D model 90M of the subject 90 to be drawn. Then, the 3D model 90M includes all of the mesh information M, the texture information Ta, and the texture information Tb described above.

The input/output controller 44 acquires the operation information of a touch panel 50 stacked on the liquid crystal display 54 that displays the information related to the mobile terminal 30a via a touch panel interface 46. Further, the input/output controller 44 displays image information on the liquid crystal display 54 via a display interface 47.

Furthermore, the mobile terminal 30a communicates with the server apparatus 20a via a communication controller 49. Thus, the mobile terminal 30a acquires the information related to the 3D model 90M from the server apparatus 20a.

### [1-4. Description of hardware configuration of server apparatus]

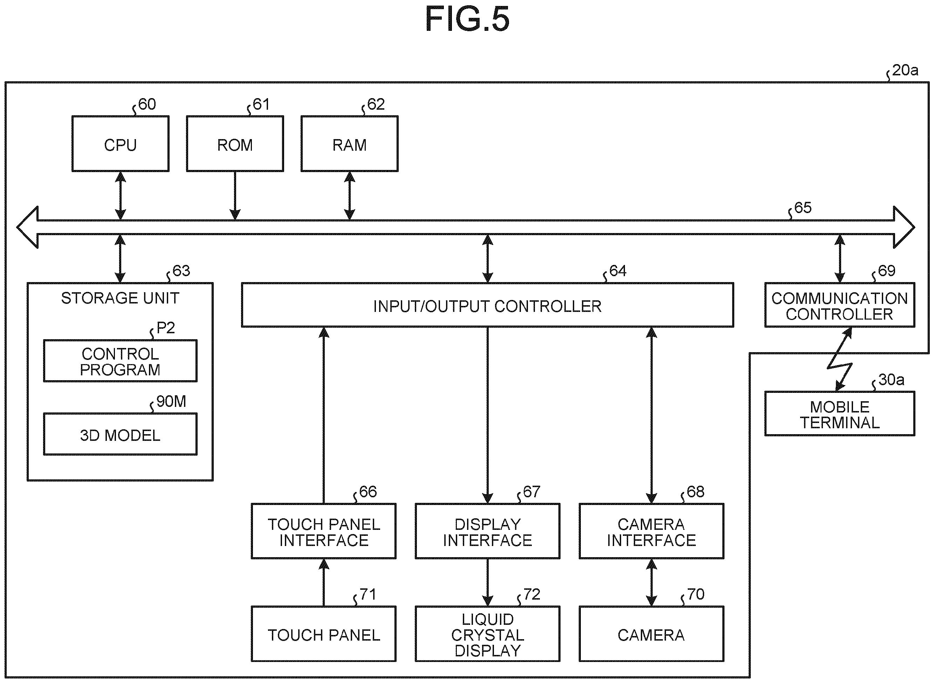

Next, the hardware configuration of the server apparatus 20a constituting the information processing system 10a will be described with reference to FIG. 5. FIG. 5 is a hardware block diagram illustrating an example of a hardware configuration of a server apparatus of the first embodiment.

The server apparatus 20a has a configuration in which a central processing unit (CPU) 60, a read only memory (ROM) 61, a random access memory (RAM) 62, a storage unit 63, and an input/output controller 64 are connected by an internal bus 65.

The CPU 60 controls the overall operation of the server apparatus 20a by loading a control program P2 stored in the storage unit 63 and various data files stored in the ROM 61 on the RAM 62 and executing the program and files. That is, the server apparatus 20a has the configuration of a general computer that operates by the control program P2. Note that the control program P2 may be provided via a wired or wireless transmission medium such as a local area network, the Internet, or digital satellite broadcasting. Further, the server apparatus 20a may execute a series of processing by hardware. Note that the control program P2 executed by the CPU 60 may be a program that is processed in time series according to the order described in the present disclosure, or may be a program that is processed in parallel or at a necessary timing such as when a call is made.

The storage unit 63 is configured by, for example, a flash memory, and stores the control program P2 executed by the CPU 60 and the 3D model 90M of the subject 90. Further, the 3D model 90M may be generated by the server apparatus 20a itself, or may be acquired from another external device. Note that the storage unit 63 generally stores the models of a plurality of subjects 90 as the 3D models 90M.

The input/output controller 64 acquires the operation information of a touch panel 71 stacked on a liquid crystal display 72 that displays the information related to the server apparatus 20a via a touch panel interface 66. Further, the input/output controller 64 displays image information on the liquid crystal display 72 via a display interface 67.

Further, the input/output controller 64 is connected to the cameras 70 via a camera interface 68. A plurality of cameras 70 is generally connected to each other, and as described above, an image of the subject 90 is captured from different positions (see FIG. 2).

Furthermore, the server apparatus 20a communicates with the mobile terminal 30a via a communication controller 69. Thus, the server apparatus 20a transmits the information related to the 3D model 90M to the mobile terminal 30a.

### [1-5. Description of functional configuration of server apparatus and mobile terminal]

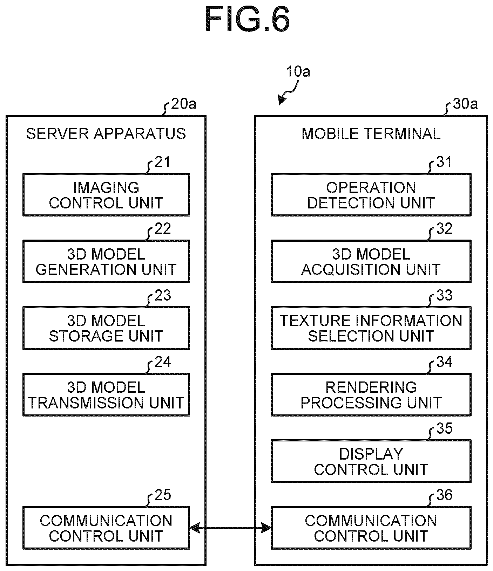

Next, the functional configurations of the server apparatus 20a and the mobile terminal 30a constituting the information processing system 10a will be described with reference to FIG. 6. FIG. 6 is a functional block diagram illustrating an example of a functional configuration of the information processing system of the first embodiment.

The CPU 60 of the server apparatus 20a loads the control program P2 on the RAM 62 and operates the program to realize an imaging control unit 21, a 3D model generation unit 22, a 3D model storage unit 23, a 3D model transmission unit 24, and a communication control unit 25 illustrated in FIG. 6 as functional units.

The imaging control unit 21 captures an image of the subject 90 by controlling the operation of the plurality of cameras 70.

The 3D model generation unit 22 generates the 3D model 90M of the subject 90 on the basis of the image of the subject 90 captured by the imaging control unit 21.

The 3D model storage unit 23 stores the 3D model 90M of the subject 90 generated by the 3D model generation unit 22.

The 3D model transmission unit 24 causes the communication control unit 25 to transmit the information related to the 3D model 90M to the mobile terminal 30a.

The communication control unit 25 controls communication between the server apparatus 20a and the mobile terminal 30a.

Further, the CPU 40 of the mobile terminal 30a loads the control program P1 on the RAM 42 and operates the program to realize an operation detection unit 31, a 3D model acquisition unit 32, a texture information selection unit 33, a rendering processing unit 34, a display control unit 35, and a communication control unit 36 illustrated in FIG. 6 as functional units.

The operation detection unit 31 detects the user's operation instruction with respect to the mobile terminal 30a. Note that the operation detection unit 31 is an example of the detection unit in the present disclosure.

The 3D model acquisition unit 32 acquires the 3D model 90M of the subject 90 from the server apparatus 20a.

The texture information selection unit 33 decides the texture information used when the rendering processing unit 34 performs the rendering processing. Specifically, the texture information selection unit 33 decides whether to perform the rendering processing using the texture information Ta or the rendering processing using the texture information Tb on the basis of the operation instruction detected by the operation detection unit 31. Note that the texture information selection unit 33 is an example of the decision unit in the present disclosure.

The rendering processing unit 34 performs the rendering processing of the 3D model 90M by using the shape information indicating the surface shape of the 3D model 90M of the subject 90 and the texture information decided by the texture information selection unit 33 to reconstruct the 3D model 90M. Note that the rendering processing unit 34 is an example of the drawing unit in the present disclosure.

The display control unit 35 displays the result of the rendering processing performed by the rendering processing unit 34 on the liquid crystal display 54 of the mobile terminal 30a.

The communication control unit 36 controls communication between the mobile terminal 30a and the server apparatus 20a.

### [1-6. Description of data transmitted from server apparatus to mobile terminal]

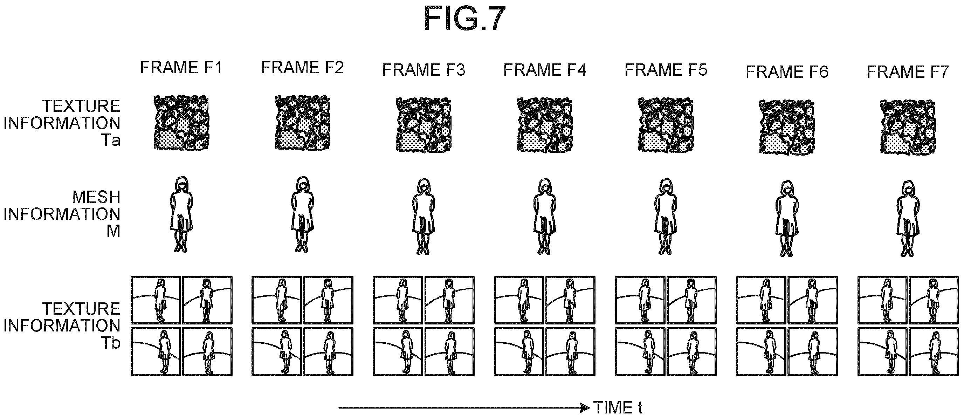

Next, the data transmitted from the server apparatus 20a to the mobile terminal 30a will be described with reference to FIG. 7. FIG. 7 is a diagram illustrating an example of data transmitted from the server apparatus to the mobile terminal in the first embodiment.

Note that, here, it is assumed that the rendering processing unit 34 of the mobile terminal 30a has a high computing power (reproduction environment), and not only the texture information Ta not dependent on the viewpoint position, but also the texture information Tb dependent on the viewpoint position can be subjected to the rendering processing in real time. Further, it is assumed that the storage unit 43 (see FIG. 4) of the mobile terminal 30a has a storage capacity that can store all the transmitted information related to the 3D model 90M.

The 3D model transmission unit 24 of the server apparatus 20a causes the communication control unit 25 to transmit information (mesh information M, texture information Ta, texture information Tb) related to the 3D model 90M to the mobile terminal 30a. These pieces of information related to the 3D model 90M are generated by the 3D model generation unit 22 when the subject 90 is observed from a plurality of directions in time series, and are stored in the 3D model storage unit 23.

Then, the 3D model transmission unit 24 of the server apparatus 20a transmits the information related to the 3D model 90M to the mobile terminal 30a as a time-series frame information (frame F1, F2, F3,...) as illustrated in FIG. 7 when an instruction of reproduction of the 3D model 90M is given from an application operating in the mobile terminal 30a. Then, the mobile terminal 30a stores the transmitted information related to the 3D model 90M in the storage unit 43 of the mobile terminal 30a.

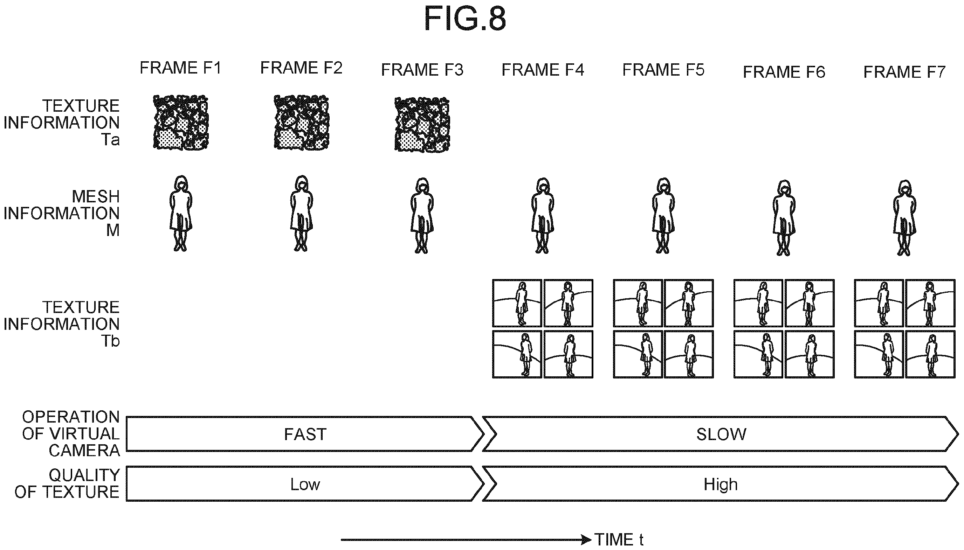

Note that when either one of the texture information Ta and the texture information Tb is available, the rendering processing of the 3D model 90M is possible, but in the present embodiment, all the pieces of the texture information Ta and Tb are transmitted to the mobile terminal 30a. Then, when the mobile terminal 30a performs the rendering processing, the texture information Ta or texture information Tb to be used is selected according to the observation conditions or the like of the subject 90. Details will be described below (see FIG. 8).

### [1-7. Description of texture information used by mobile terminal when performing rendering]

Next, a method of rendering processing performed by the mobile terminal 30a will be described. FIG. 8 is a diagram explaining texture information T used when the mobile terminal of the first embodiment performs rendering.

The user of the mobile terminal 30a generally observes the 3D model 90M having subjected to the rendering processing from various viewpoint positions. The mobile terminal 30a of the present embodiment changes the data size of the texture information T used for rendering by switching the rendering method for the 3D model 90M according to a change in the user's viewpoint position (observation position and observation direction).

Specifically, the mobile terminal 30a determines that high-quality texture information is unnecessary when the user quickly moves the viewpoint position, and uses the texture information Ta, which has a small data size and is not dependent on the viewpoint position, to perform rendering. On the other hand, when the viewpoint position moves slowly or the viewpoint position is stationary, it is determined that high-quality texture information is necessary, and the texture information Tb, which has a large data size and is dependent on the viewpoint position, is used to perform rendering.

For example, the example illustrated in FIG. 8 indicates that the movement of a virtual camera, that is, the movement of the user's viewpoint position is fast from the frame F1 to the frame F3. Further, the frame F4 to the frame F7 indicate that the movement of the viewpoint position is slow. In such a case, the mobile terminal 30a performs the rendering processing using the texture information Ta from the frame F1 to the frame F3. Then, from the frame F4 to the frame F7, the rendering processing is performed using the texture information Tb.

Note that the mobile terminal 30a detects the moving speed of the viewpoint position by, for example, the touch panel 50 of the mobile terminal 30a detecting the speed and the number of times of operations (for example, swipe operation) for changing the observation direction.

### [1-8. Description of flow of processing performed by mobile terminal]

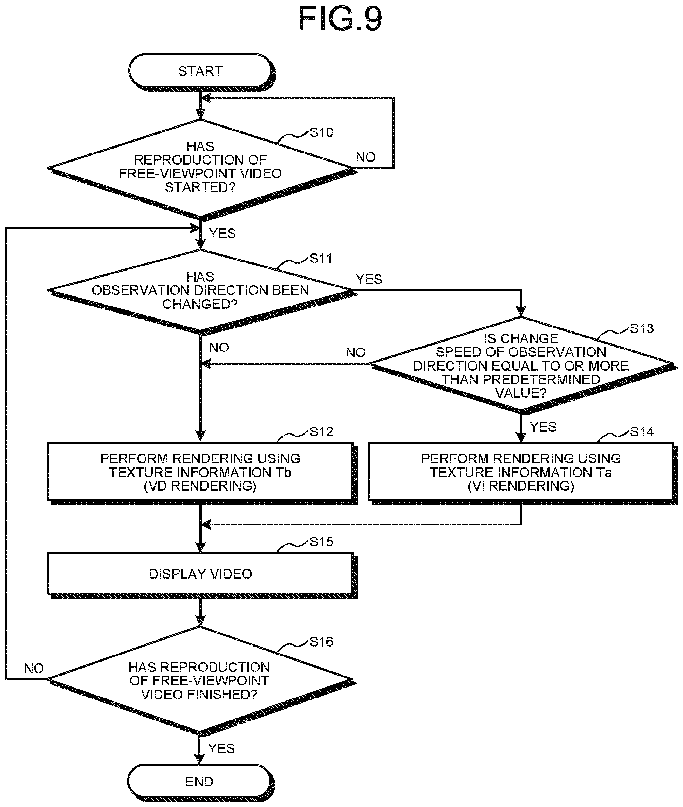

Next, the flow of processing performed by the mobile terminal 30a of the first embodiment will be described with reference to FIG. 9. FIG. 9 is a flowchart illustrating an example of a flow of processing performed by the mobile terminal of the first embodiment. Note that it is assumed that before the flowchart of FIG. 9 operates, all the pieces of information related to the 3D model 90M of the subject 90 have been transmitted to the mobile terminal 30a.

The operation detection unit 31 determines whether or not the reproduction of a free-viewpoint video has started on the mobile terminal 30a (Step S10). When it is determined that the reproduction of the free-viewpoint video has started (Step S10: Yes), the processing proceeds to Step S11. On the other hand, when it is not determined that the reproduction of the free-viewpoint video has started (Step S10: No), Step S10 is repeated until, for example, a timeout occurs.

When Yes is determined in Step S10, the operation detection unit 31 determines whether the observation direction of the rendered 3D model 90M has been changed (Step S11). When it is determined that the observation direction of the 3D model 90M has been changed (Step S11: Yes), the processing proceeds to Step S13. On the other hand, when it is not determined that the observation direction of the 3D model 90M has been changed (Step S11: No), the processing proceeds to Step S12. Note that it is sufficient if whether or not the observation direction of the 3D model 90M has been changed is determined according to, for example, whether or not an operation for changing the observation direction has been performed on the liquid crystal display 54 (touch panel 50) of the mobile terminal 30a.

When Yes is determined in Step S11, the operation detection unit 31 determines whether the change speed of the observation direction is equal to or higher than a predetermined value (Step S13). When it is determined that the change speed of the observation direction is equal to or higher than the predetermined value (Step S13: Yes), the processing proceeds to Step S14. On the other hand, when it is not determined that the change speed of the observation direction is equal to or higher than the predetermined value (Step S13: No), the processing proceeds to Step S12.

When Yes is determined in Step S13, the texture information selection unit 33 decides to perform drawing using the texture information Ta, and the rendering processing unit 34 uses the texture information Ta to perform the VI rendering of the 3D model 90M (Step S14). Then, the processing proceeds to Step S15.

When No is determined in Step S11 and when No is determined in Step S13, the texture information selection unit 33 decides to perform drawing using the texture information Tb, and the rendering processing unit 34 uses the texture information Tb to perform the VD rendering of the 3D model 90M (Step S12).

Following Step S12 or Step S14, the display control unit 35 displays the video subjected to the rendering processing on the liquid crystal display 54 (Step S15).

Next, the operation detection unit 31 determines whether or not the reproduction of a free-viewpoint video is ended on the mobile terminal 30a (Step S16). When it is determined that the reproduction of the free-viewpoint video is ended (Step S16: Yes), the mobile terminal 30a ends the processing of FIG. 9. On the other hand, when it is not determined that the reproduction of the free-viewpoint video is ended (Step S16: No), the processing returns to Step S11.

Note that when the VD rendering is performed in Step S12, the viewpoint position at that time is stored in the mobile terminal 30a as a log, and the log is separately fed back to the server apparatus 20a, so that it is possible to distinguish between a frequently seen viewpoint range and a rarely seen viewpoint range for each reproduction content. Thus, the compression rate of the information transmitted from the server apparatus 20a to the mobile terminal 30a may be changed between the frequently seen viewpoint range and the rarely seen viewpoint range. That is, the total amount of information can be reduced by transmitting the information of the frequently seen viewpoint range at a low compression rate and the information of the rarely seen viewpoint range at a high compression rate.

### [1-9. Effect of the first embodiment]

As described above, with the mobile terminal 30a (information processing apparatus) of the first embodiment, the texture information selection unit 33 (decision unit) decides which texture information Ta or Tb that expresses the texture of the 3D model 90M in a plurality of different formats acquired by the 3D model acquisition unit 32 to use when drawing the 3D model 90M according to the operation instruction detected by the operation detection unit 31. Then, the rendering processing unit 34 (drawing unit) renders the texture information Ta or the texture information Tb selected by the texture information selection unit 33 on the 3D model 90M reconstructed on the basis of the mesh information M (shape information) so as to reconstruct the 3D model 90M.

Thus, the data size necessary for rendering can be changed. For example, for the 3D model 90M, which requires high texture quality, rendering using the texture information Tb dependent on the viewpoint position, which has a large data size, can be performed, and for the other 3D model 90M, rendering using the texture information Ta not dependent on the viewpoint position, which has a small data size, can be performed.

Further, in the mobile terminal 30a (information processing apparatus) of the first embodiment, the texture information in a plurality of different formats includes the texture information Ta (first texture information) not dependent on the viewpoint position for observing the 3D model 90M and the texture information Tb (second texture information) dependent on the viewpoint position for observing the 3D model 90M.

Thus, it is possible to properly use the VD rendering, which has a high rendering processing load but high texture quality, and the VI rendering, which has a low rendering processing load but low texture quality.

Further, in the mobile terminal 30a (information processing apparatus) of the first embodiment, the operation detection unit 31 (detection unit) detects an operation instruction given when observing the 3D model 90M (3D object), and the texture information selection unit 33 (decision unit) decides the texture information T when drawing the 3D model 90M on the basis of the operation instruction detected by the operation detection unit 31.

Thus, the 3D model 90M (3D object) can be drawn using the appropriate texture information T according to the operation instruction.

Further, in the mobile terminal 30a (information processing apparatus) of the first embodiment, the operation instruction detected by the operation detection unit 31 (detection unit) is the observation direction or the change in the observation direction of the 3D model 90M.

Thus, the rendering method can be changed according to the change in the observation direction.

Further, in the mobile terminal 30a (information processing apparatus) of the first embodiment, when the operation instruction is a change in the observation direction of the 3D model 90M, the texture information selection unit 33 (decision unit) selects the texture information Ta not dependent on the viewpoint position when the change speed of the observation direction is larger than the predetermined value, and selects the texture information Tb dependent on the viewpoint position when the change speed of the observation direction is larger than the predetermined value.

Thus, when the observation direction is changed quickly, texture mapping not dependent on the viewpoint position can be performed, and when the change in the observation direction is gradual, texture mapping dependent on the viewpoint position can be performed.

### [1-10. Description of variation example of the first embodiment]

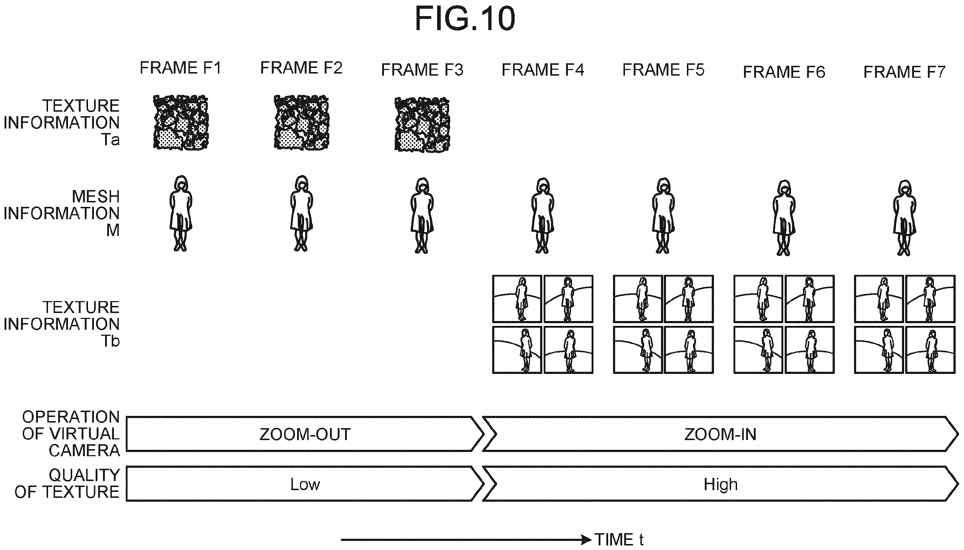

The user's operation detected by the mobile terminal 30a is not limited to the change speed of the observation direction. Hereinafter, as a variation example of the first embodiment, an example of switching the rendering method for the 3D model 90M according to the user's zoom operation will be described with reference to FIG. 10. Note that FIG. 10 is a diagram explaining texture information used when a mobile terminal of a variation example of the first embodiment performs rendering.

The user of the mobile terminal 30a observes the 3D model 90M having subjected to the rendering processing at a viewing angle (magnification) suitable for the usage. The mobile terminal 30a of the variation example of the first embodiment changes the data size of the texture information used for rendering by switching the rendering method for the 3D model 90M according to the viewing angle instructed by the user.

Specifically, the mobile terminal 30a determines that high-quality texture information is unnecessary when the user observes the rendered 3D model 90M of the subject 90 at a wide viewing angle (low magnification), and performs rendering using the texture information Ta not dependent on the viewpoint position. On the other hand, it is determined that high-quality texture information is necessary when the user observes the rendered 3D model 90M of the subject 90 at a narrow viewing angle (high magnification), and rendering is performed using the texture information Tb dependent on the viewpoint position.

For example, in the example illustrated in FIG. 10, the viewing angle of the virtual camera is set wide (that is, the magnification is low) from the frame F1 to the frame F3. Further, the viewing angle of the virtual camera is set narrow (that is, the magnification is high) from the frame F4 to the frame F7. In such a case, the mobile terminal 30a performs the rendering processing using the texture information Ta from the frame F1 to the frame F3. Then, from the frame F4 to the frame F7, the rendering processing is performed using the texture information Tb.

Note that, the mobile terminal 30a detects the change in the viewing angle of the virtual camera when, for example, the touch panel 50 of the mobile terminal 30a detects an operation of changing the viewing angle (for example, a pinch-in operation of narrowing the viewing angle to enlarge the image, or a pinch-out operation of widening the viewing angle to reduce the image).

### [1-11. Description of flow of processing performed by mobile terminal in variation example of the first embodiment]

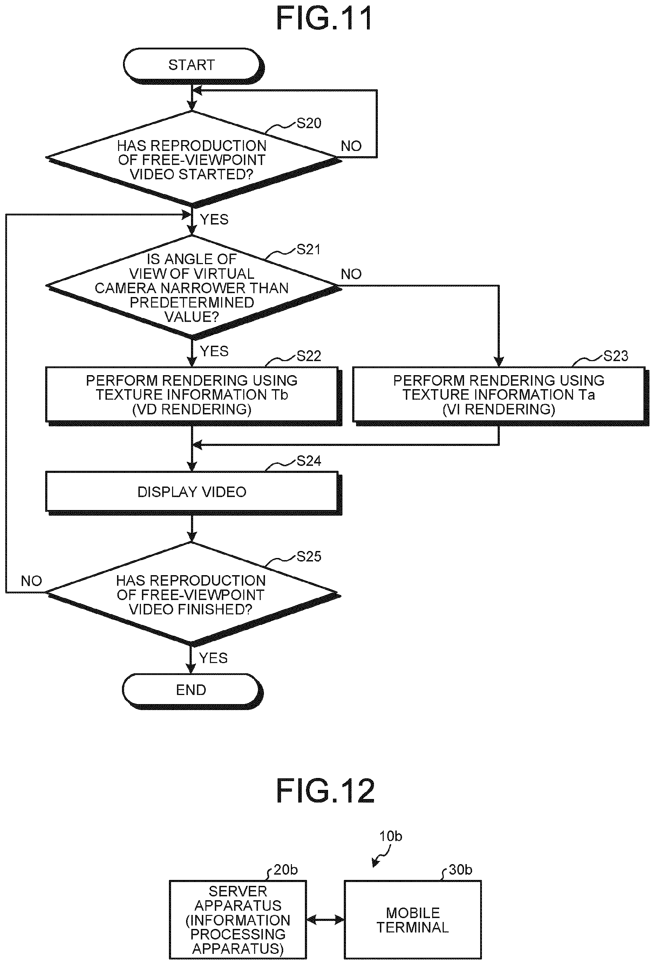

Next, the flow of processing performed by the mobile terminal 30a of the variation example of the first embodiment will be described with reference to FIG. 11. FIG. 11 is a flowchart illustrating an example of a flow of processing performed by the mobile terminal of the variation example of the first embodiment. Note that it is assumed that before the flowchart of FIG. 11 operates, all the pieces of information related to the 3D model 90M of the subject 90 have been transmitted to the mobile terminal 30a.

The operation detection unit 31 determines whether or not the reproduction of a free-viewpoint video has started on the mobile terminal 30a (Step S20). When it is determined that the reproduction of the free-viewpoint video has started (Step S20: Yes), the processing proceeds to Step S21. On the other hand, when it is not determined that the reproduction of the free-viewpoint video has started (Step S20: No), Step S20 is repeated.

When Yes is determined in Step S20, the operation detection unit 31 determines whether the angle of view (viewing angle) of the virtual camera when observing the rendered 3D model 90M is narrower than a predetermined value (Step S21). When it is determined that the angle of view of the virtual camera is narrower than the predetermined value (Step S21: Yes), the processing proceeds to Step S22. On the other hand, when it is not determined that the angle of view (viewing angle) of the virtual camera is narrower than the predetermined value (Step S21: No), the processing proceeds to Step S23. Note that it is sufficient if whether the angle of view of the virtual camera is narrower than the predetermined value is determined by, for example, a pinch-in operation or a pin-out operation performed with respect to the liquid crystal display 54 (touch panel 50) of the mobile terminal 30a.

Since the content of each processing of Steps S22, S23, S24, and S25 performed after Step S21 is the same as the flow of the processing described in the first embodiment (Steps S12, S14, S15, and S16 in FIG. 9), the description is omitted.

### [1-12. Effect of variation example of the first embodiment]

As described above, in the mobile terminal 30a (information processing apparatus) of the variation example of the first embodiment, the operation instruction detected by the operation detection unit 31 (detection unit) is the viewing angle when observing the 3D model 90M.

Thus, it is possible to select appropriate texture information and perform rendering according to the viewing angle when observing the 3D model 90M.

Further, in the mobile terminal 30a (information processing apparatus) of the variation example of the first embodiment, when the user's operation instruction is the viewing angle when observing the 3D model 90M, the texture information selection unit 33 (decision unit) selects the texture information Ta not dependent on the viewpoint position when the viewing angle is wider than the predetermined value and selects the texture information Tb dependent on the viewpoint position when the viewing angle is narrower than the predetermined value.

Thus, rendering can be performed according to the user's observation state. That is, when enlarging and observing the drawn 3D model 90M, rendering (VD rendering) is performed using high-quality texture information Tb dependent on the viewpoint position, and when the drawn 3D model 90M is observed at a wide viewing angle, rendering (VI rendering) can be performed using the texture information Ta not dependent on the viewpoint position.

Note that the user's operation instruction with respect to the mobile terminal 30a is not limited to those described in the first embodiment and the variation example of the first embodiment.

For example, the movement of an external camera, which is not illustrated and built in the mobile terminal 30a, that captures an image of the outside may be detected, and the 3D model 90M drawn by the rendering method according to the movement of the camera may be superimposed on the image captured by the camera. Thus, application to so-called Augmented Reality (AR), in which the 3D model 90M is superimposed on a live-action image, becomes possible.

Further, the movement of the line of sight of the user who is looking at the mobile terminal 30a may be detected, and the rendering method for the 3D model 90M drawn on the screen of the mobile terminal 30a may be switched according to the movement of the line of sight. For example, the 3D model 90M on which a gaze is focused may be drawn by the VD rendering with high texture quality. Note that the movement of the line of sight of the user who is looking at the mobile terminal 30a can be measured by, for example, analyzing a face image including the user's eyeball captured by an internal camera, which is not illustrated and built in the mobile terminal 30a, that captures the screen direction.

Further, the rendering method for the 3D model 90M drawn on the screen of the mobile terminal 30a may be switched according to the brightness of the environment in which the mobile terminal 30a is used. For example, when the outside is dark, the VI rendering with low texture quality may be performed, and when the outside is bright, the VD rendering with high texture quality may be performed. Note that the brightness of the environment in which the mobile terminal 30a is used can be measured by, for example, an illuminance meter, which is not illustrated and built in the mobile terminal 30a.

Furthermore, the rendering method for the 3D model 90M drawn on the screen of the mobile terminal 30a may be switched according to the remaining battery level of the mobile terminal 30a. For example, when the remaining battery level is low, the VI rendering with a low processing load may be performed, and when the remaining battery level is high, the VD rendering with a high processing load may be performed.

### (2. Second embodiment)

In the information processing system 10a described in the first embodiment, it is necessary to transmit all the data necessary for rendering the 3D model 90M to the mobile terminal 30a in advance. Therefore, the mobile terminal 30a requires a large storage capacity. Therefore, in order to reduce the storage capacity of the mobile terminal 30a, it is desirable to transmit only the minimum information necessary for rendering to the mobile terminal.

The second embodiment solves such a problem. FIG. 12 is a block diagram illustrating an example of a system configuration of an information processing system of the second embodiment. An information processing system 10b includes a server apparatus 20b and a mobile terminal 30b. In the information processing system 10b, which is the second embodiment, the server apparatus 20b, which is an example of the information processing apparatus of the present disclosure, selects texture information T in the form suitable for rendering a 3D model 90M of the subject stored in the server apparatus 20b, for example, on the basis of information related to the virtual viewpoint of the user received from the mobile terminal 30b. Then, the server apparatus 20b transmits information necessary for rendering, including the selected texture information, to the mobile terminal 30b. Then, the mobile terminal 30b performs rendering processing on the basis of the information received from the server apparatus 20b and performs displaying on the screen. In this way, the information processing system 10b is a system that performs a so-called streaming operation in which the server apparatus 20b selects only the information necessary for the rendering processing and transmits the information to the mobile terminal 30b according to the operation instruction given in the mobile terminal 30b. Note that the mobile terminal 30b is an example of the drawing apparatus in the present disclosure. Note that a display device such as a television monitor or head mount display (HMD) may be used instead of the mobile terminal 30b.

That is, the server apparatus 20b generates and stores the 3D model 90M of the subject. Further, the server apparatus 20b receives the information related to the operation performed with respect to the mobile terminal 30b, and selects the texture information necessary for the mobile terminal 30b to draw the 3D model 90M of the subject. Then, the server apparatus 20b transmits the information necessary for drawing the 3D model 90M, including the selected texture information, to the mobile terminal 30b.

Further, the mobile terminal 30b transmits to the server apparatus 20b the operation content related to the observation of the 3D model 90M performed with respect to the mobile terminal 30b. Further, the mobile terminal 30b acquires the information necessary for rendering the 3D model 90M from the server apparatus 20b. Furthermore, the mobile terminal 30b renders the 3D model 90M of the subject by generating a virtual image observed from a set virtual viewpoint.

Note that since the hardware structure of the server apparatus 20b is the same as the hardware structure of the server apparatus 20a described in the first embodiment, the description will be omitted. Further, since the hardware structure of the mobile terminal 30b is the same as the hardware structure of the mobile terminal 30a described in the first embodiment, the description will be omitted.

### [2-1. Description of functional configuration of server apparatus and mobile terminal]

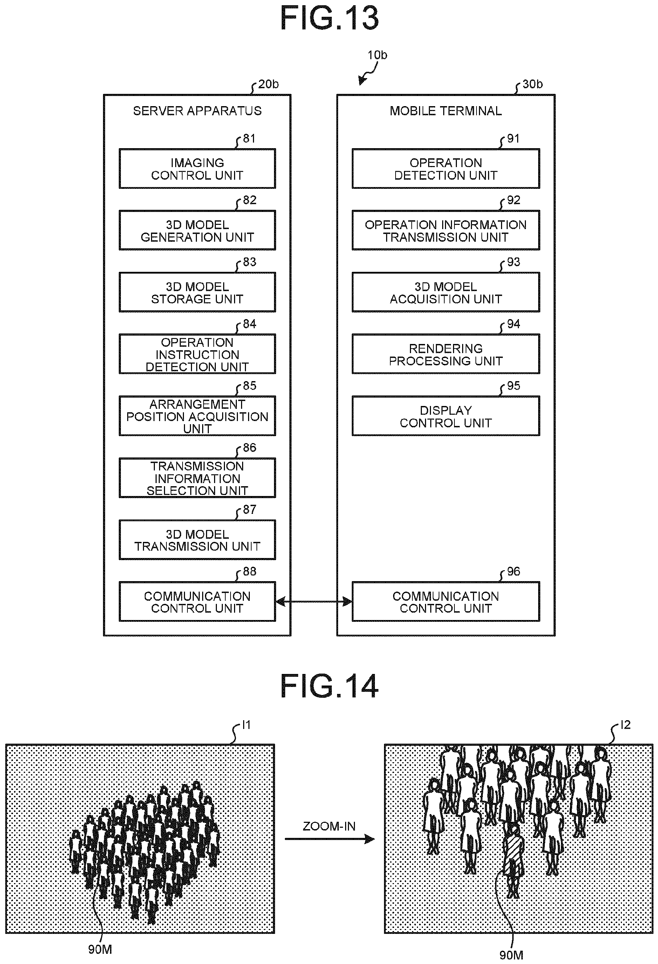

Next, the functional configurations of the server apparatus 20b and the mobile terminal 30b constituting the information processing system 10b will be described with reference to FIG. 13. FIG. 13 is a functional block diagram illustrating an example of a functional configuration of the information processing system of the second embodiment.

The server apparatus 20b includes an imaging control unit 81, a 3D model generation unit 82, a 3D model storage unit 83, an operation instruction detection unit 84, an arrangement position acquisition unit 85, a transmission information selection unit 86, a 3D model transmission unit 87, and a communication control unit 88.

The imaging control unit 81, the 3D model generation unit 82, the 3D model storage unit 83, and the communication control unit 88 have the same functions as the imaging control unit 21, the 3D model generation unit 22, the 3D model storage unit 23, and the communication control unit 25 included in the server apparatus 20a described in the first embodiment. Therefore, the description of each function will be omitted. Note that the 3D model storage unit 83 is an example of the storage unit in the present disclosure.

The operation instruction detection unit 84 detects the operation instruction given to the mobile terminal 30b when observing the 3D model 90M output from the mobile terminal 30b (drawing apparatus) that draws the 3D model 90M (3D object). Note that the operation instruction detection unit 84 is an example of the detection unit in the present disclosure.

The arrangement position acquisition unit 85 acquires the arrangement position of the 3D model 90M in a three-dimensional space. Specifically, the arrangement position acquisition unit 85 acquires the arrangement position of the 3D model 90M when performing reproduction control of the 3D model 90M according to the operation instruction from the mobile terminal 30b.

The transmission information selection unit 86 selects which of a plurality of different pieces of texture information Ta and Tb stored in the 3D model storage unit 83 (storage unit) to transmit to the mobile terminal 30b according to the operation instruction detected by the operation instruction detection unit 84. Note that the transmission information selection unit 86 is an example of the decision unit in the present disclosure.

The 3D model transmission unit 87 causes the communication control unit 88 to transmit the information selected by the transmission information selection unit 86 to the mobile terminal 30b. Note that the 3D model transmission unit 87 is an example of the transmission unit in the present disclosure.

Further, the mobile terminal 30b includes an operation detection unit 91, an operation information transmission unit 92, a 3D model acquisition unit 93, a rendering processing unit 94, a display control unit 95, and a communication control unit 96.

The operation detection unit 91, the rendering processing unit 94, the display control unit 95, and the communication control unit 96 have the same functions as the operation detection unit 31, the rendering processing unit 34, the display control unit 35, and the communication control unit 36 included in the mobile terminal 30a described in the first embodiment. Therefore, the description of each function will be omitted.

The operation information transmission unit 92 transmits the operation instruction of the user with respect to the mobile terminal 30b detected by the operation detection unit 91 to the server apparatus 20b.

The 3D model acquisition unit 93 acquires the information necessary for drawing the 3D model 90M transmitted from the server apparatus 20b.

### [2-2. Description of operation of information processing system]

The outline of the operation performed by the information processing system 10b of the second embodiment will be described with reference to FIG. 14. FIG. 14 is a diagram illustrating an example of processing performed by the information processing system of the second embodiment. Similar to the first embodiment, the information processing system 10b changes the rendering method for the 3D model 90M displayed on the liquid crystal display 54 of the mobile terminal 30b according to the operation instruction of the user. In particular, the information processing system 10b of the second embodiment transmits the operation instruction of the user with respect to the mobile terminal 30b to the server apparatus 20b, and the server apparatus 20b selects information necessary for rendering. Then, the server apparatus 20b transmits information necessary for rendering to the mobile terminal 30b, and the mobile terminal 30b performs rendering.

For example, FIG. 14 illustrates a case where the user of the mobile terminal 30b performs a pinch-in operation to give a zoom-in instruction on a screen I1 on which a large number of the same 3D models 90M are drawn. At this time, the server apparatus 20b receives the fact that the zoom-in operation instruction has been given and selects the information necessary for rendering on a next screen.

Specifically, the server apparatus 20b determines that, when zoom-in is performed, when the distance between the viewpoint position (the position of the virtual camera) and the 3D model 90M is close, the 3D model 90M drawn at a position close to the center of the screen, which is the observation direction, should be subjected to the VD rendering using the texture information Tb, and selects the texture information Tb and transmits the texture information Tb to the mobile terminal 30b. Further, it is determined that the 3D model 90M that does not satisfy the above conditions should be subjected to the VI rendering using the texture information Ta, and the texture information Ta is selected and transmitted to the mobile terminal 30b.

Then, the mobile terminal 30b renders an image corresponding to the zoom-in operation, generates a screen 12, and displays the screen on the mobile terminal 30b. In FIG. 14, it is determined that only the 3D model 90M displayed at the head on the screen I2 is at the position within a predetermined distance from the observation direction, i.e., the center of the screen, and the distance from the viewpoint position to the 3D model 90M is equal to or less than the predetermined value. Therefore, on the screen 12, only the 3D model 90M is drawn by the VD rendering. Then, the other 3D models are drawn by the VI rendering.

In the example of FIG. 14, since the plurality of the exact same 3D models 90M is drawn, the server apparatus 20b receives the zoom-in operation instruction, selects both the texture information Ta and the texture information Tb of the 3D model 90M, and transmits the texture information Ta and the texture information Tb to the mobile terminal 30b together with the mesh information M.

Note that when the 3D models 90M displayed on the screen I1 are all different models, the server apparatus 20b selects either the texture information Ta or Tb for each 3D model according to the operation instruction, and transmits the texture information to the mobile terminal 30b together with the mesh information M.

### [2-3. Description of flow of processing performed by information processing system]

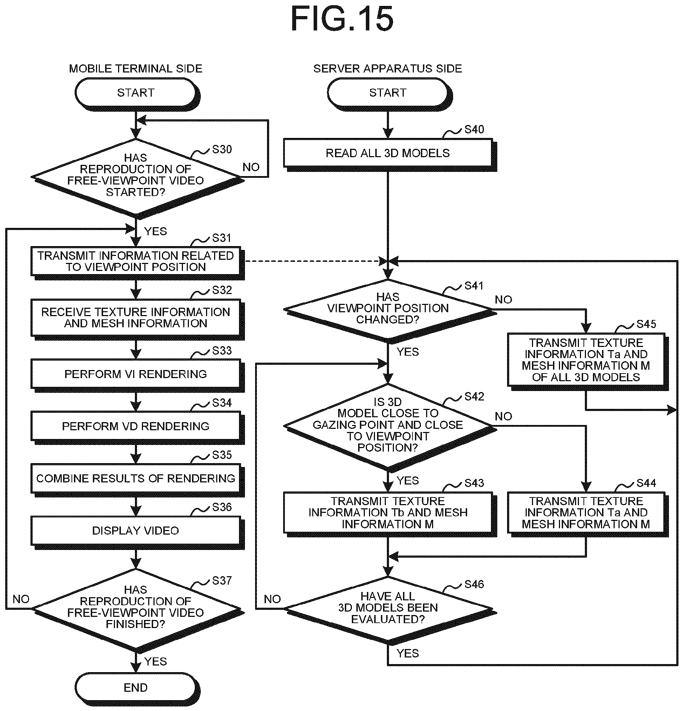

Next, the flow of processing performed by the information processing system 10b of the second embodiment will be described with reference to FIG. 15. FIG. 15 is a flowchart illustrating an example of a flow of processing performed by the information processing system of the second embodiment. First, the flow of processing performed by the mobile terminal 30b will be described.

The operation detection unit 91 determines whether or not the reproduction of a free-viewpoint video has started on the mobile terminal 30b (Step S30). When it is determined that the reproduction of the free-viewpoint video has started (Step S30: Yes), the processing proceeds to Step S31. On the other hand, when it is not determined that the reproduction of the free-viewpoint video has started (Step S30: No), Step S30 is repeated until, for example, a timeout occurs.

The operation information transmission unit 92 causes the communication control unit 96 to transmit the information related to the operation instruction detected by the operation detection unit 91 to the server apparatus 20b (Step S31).

The 3D model acquisition unit 93 receives the texture information and the mesh information of the 3D model 90M from the server apparatus 20b (Step S32).

The rendering processing unit 94 draws the 3D model 90M in a predetermined position by the VI rendering (Step S33).

The rendering processing unit 94 draws the 3D model 90M in a predetermined position by the VD rendering (Step S34).

Furthermore, the rendering processing unit 94 combines the result of the VI rendering and the result of the VD rendering on one screen (Step S35). Specifically, the front-back relationship or the like of the 3D model 90M is determined and the hidden surface processing or the like is performed.

The display control unit 95 displays a video having subjected to the rendering processing on the liquid crystal display 54 (Step S36).

Next, the operation detection unit 91 determines whether or not the reproduction of a free-viewpoint video is ended on the mobile terminal 30b (Step S37). When it is determined that the reproduction of the free-viewpoint video is ended (Step S37: Yes), the mobile terminal 30b ends the processing of FIG. 15. On the other hand, when it is not determined that the reproduction of the free-viewpoint video is ended (Step S37: No), the processing returns to Step S31.

Next, the flow of processing performed by the server apparatus 20b will be described. First, the transmission information selection unit 86 reads the information of all the 3D models 90M currently displayed on the screen of the mobile terminal 30b from the 3D model storage unit 83 (Step S40).

The operation instruction detection unit 84 determines whether the viewpoint position (position of the virtual camera) has been changed on the basis of the operation instruction transmitted from the operation information transmission unit 92 of the mobile terminal 30b (Step S41). When it is determined that the viewpoint position has been changed (Step S41: Yes), the processing proceeds to Step S42. On the other hand, when it is not determined that the viewpoint position has been changed (Step S41: No), the processing proceeds to Step S45.

When Yes is determined in Step S41, the transmission information selection unit 86 determines, regarding each 3D model 90M displayed on the screen of the mobile terminal 30b, whether the 3D model 90M is at a position within a predetermined distance from the user's gazing point (observation direction) and within a predetermined distance from the viewpoint position (Step S42). When it is determined that the 3D model 90M is at a position within the predetermined distance from the user's gazing point and within the predetermined distance from the viewpoint position (Step S42: Yes), the processing proceeds to Step S43. On the other hand, when it is not determined that the 3D model 90M is at a position within the predetermined distance from the user's gazing point and within the predetermined distance from the viewpoint position (Step S42: No), the processing proceeds to Step S44. Note that the arrangement position of each of the 3D models 90M is acquired from the arrangement position acquisition unit 85.

When Yes is determined in Step S42, the transmission information selection unit 86 selects the texture information Tb and the mesh information M of the 3D model 90M. Then, the 3D model transmission unit 87 causes the communication control unit 88 to transmit the selected information to the mobile terminal 30b (Step S43). Then, the processing proceeds to Step S46.

On the other hand, when No is determined in Step S42, the transmission information selection unit 86 selects the texture information Ta and the mesh information M of the 3D model 90M. Then, the 3D model transmission unit 87 causes the communication control unit 88 to transmit the selected information to the mobile terminal 30b (Step S44). Then, the processing proceeds to Step S46.

Returning to Step S41, when No is determined in Step S41, the transmission information selection unit 86 selects the texture information Ta and the mesh information M of all the 3D models 90M displayed on the screen of the mobile terminal 30b. Then, the 3D model transmission unit 87 causes the communication control unit 88 to transmit the selected information to the mobile terminal 30b (Step S45). Then, the processing returns to Step S41.

Following Step S43 or Step S44, the transmission information selection unit 86 determines whether all the 3D models 90M displayed on the screen of the mobile terminal 30b have been evaluated (Step S46). When it is determined that all the 3D models 90M have been evaluated (Step S46: Yes), the processing returns to Step S41. On the other hand, when it is not determined that all the 3D models 90M have been evaluated (Step S46: No), the processing returns to Step S42.

### [2-4. Effect of the second embodiment]

As described above, with the server apparatus 20b (information processing apparatus) of the second embodiment, the operation instruction detection unit 84 (detection unit) detects the operation instruction given to the mobile terminal 30b when observing the 3D model 90M output from the mobile terminal 30b (drawing apparatus) that draws the 3D model 90M (3D object). Then, the transmission information selection unit 86 (decision unit) selects either the texture information Ta or Tb in a plurality of different formats of the 3D model 90M stored in the 3D model storage unit 83 (storage unit) on the basis of the operation instruction detected by the operation instruction detection unit 84. Then, the 3D model transmission unit 87 (transmission unit) transmits the selected texture information Ta or texture information Tb and the mesh information M (shape information) to the mobile terminal 30b. Then, the mobile terminal 30b renders the 3D model 90M using the transmitted information.

Thus, the server apparatus 20b (information processing apparatus) can transmit only the information necessary for rendering to the mobile terminal 30b (drawing apparatus). Therefore, the storage capacity of the mobile terminal 30b can be kept small.

Further, in the server apparatus 20b (information processing apparatus) of the second embodiment, the operation instruction is the distance between the 3D model 90M and the viewpoint position when observing the 3D model 90M (3D object).

Thus, appropriate texture information can be selected to perform rendering according to the distance between the 3D model 90M and the viewpoint position when observing the 3D model 90M.

Further, in the server apparatus 20b (information processing apparatus) of the second embodiment, when the operation instruction is the distance between the 3D model 90M and the viewpoint position when observing the 3D model 90M (3D object), the transmission information selection unit 86 (decision unit) selects the texture information Ta not dependent on the viewpoint position when the distance is larger than the predetermined value and selects the texture information Tb dependent on the viewpoint position when the distance is equal to or less than the predetermined value.

Thus, when the distance between the 3D model 90M and the viewpoint position is short, the quality of the texture can be improved by performing the VD rendering, and when the distance between the 3D model 90M and the viewpoint position is long, the load of the processing can be reduced by performing the VI rendering.

Further, in the server apparatus 20b (information processing apparatus) of the second embodiment, when the operation instruction is the observation direction when observing the 3D model 90M (3D object), the transmission information selection unit 86 (decision unit) selects the texture information Tb dependent on the viewpoint position when the 3D model 90M is at a position within the predetermined distance from the observation direction and selects the texture information Ta not dependent on the viewpoint position when the 3D model 90M is at a position farther than the predetermined distance from the observation direction.

Thus, it is possible to draw the 3D model 90M close to the observation direction (gazing point) with high texture quality by the VD rendering.

### [2-5. Description of variation example (1) of the second embodiment]

Hereinafter, as the variation example (1) of the second embodiment, an example in which the information processing system 10b performs rendering on the basis of the information indicating VI priority or VD priority given in advance to each 3D model 90M will be described.

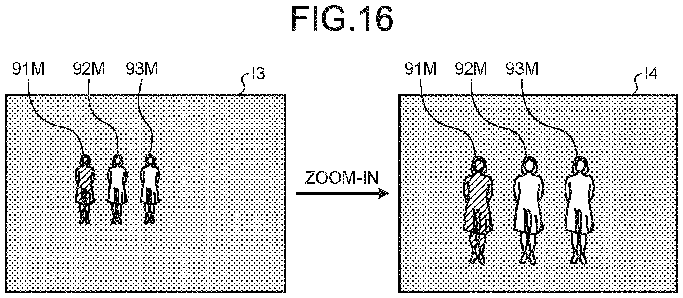

FIG. 16 is a diagram illustrating an example of processing performed by variation example (1) of the information processing system of the second embodiment. Three different 3D models 91M, 92M, and 93M are drawn on a screen I3 of the mobile terminal 30b. Here, it is assumed that the 3D model 91M is given a VD priority flag, and the 3D models 92M and 93M are given a VI priority flag.

The VD priority flag is a flag indicating that the 3D model given the flag is drawn by the VD rendering when the various observation conditions described above are satisfied, and is drawn by the VI rendering in other cases. Therefore, the 3D model given the VD priority flag has both the texture information Ta and Tb as texture information. For example, the VD priority flag is given to the main subject (main character, or the like) of a reproduction content.

Further, the VI priority flag is a flag indicating that the 3D model given the flag is drawn by the VI rendering regardless of the observation conditions. Therefore, the 3D model given the VI priority flag has only the texture information Ta as texture information. For example, the VI priority flag is given to an extra subject in the reproduction content.

In FIG. 16, when the screen I3 is enlarged (zoomed in) to generate a screen 14, normally, all the 3D models are subjected to the VD rendering, but in the case of the present variation example, only the 3D model 91M given the VD priority flag is subjected to the VD rendering. Then, the 3D models 92M and 93M are subjected to the VI rendering.

Thus, by giving a flag that designates the rendering format for each 3D model, the amount of information necessary for rendering can be reduced as a whole.

### [2-6. Description of variation example (2) of the second embodiment]

Hereinafter, as a variation example (2) of the second embodiment, an example in which the information processing system 10b increases the amount of information of the texture information Tb transmitted from the server apparatus 20b to the mobile terminal 30b according to the duration of the VD rendering of a specific 3D model 90M will be described.

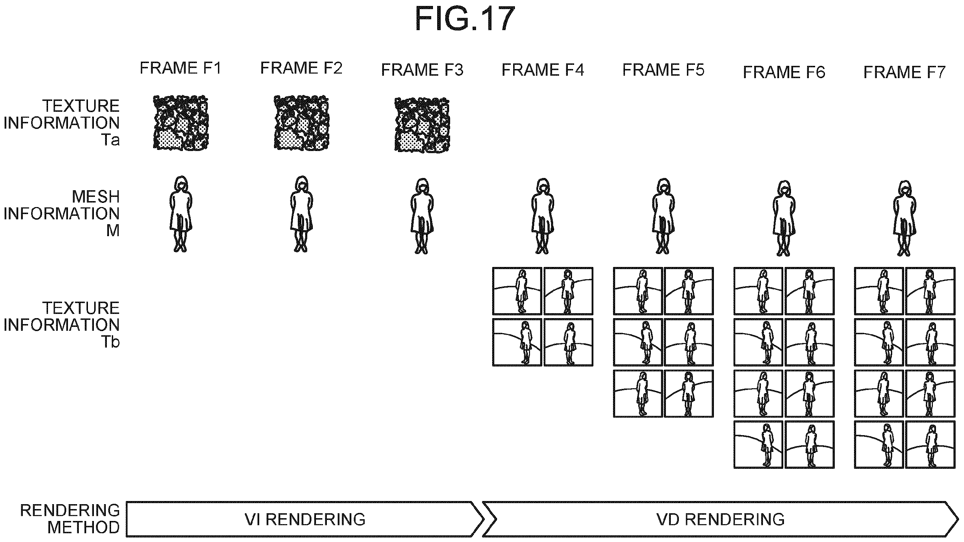

FIG. 17 is a diagram illustrating an example of processing performed by variation example (2) of the information processing system of the second embodiment. In FIG. 17, the VI rendering is performed from the frame F1 to the frame F3. At this time, the texture information Ta and the mesh information M are transmitted from the server apparatus 20b to the mobile terminal 30b.

Then, in the frame F4, it is determined that the various observation conditions described above are satisfied and the VD rendering has started. At this time, the texture information Tb and the mesh information M are transmitted from the server apparatus 20b to the mobile terminal 30b.

The texture information Tb is expressed by a set of N images obtained by observing the subject 90 from N viewpoints. Then, the transmission information selection unit 86 performs control to increase the number of images transmitted from the server apparatus 20b to the mobile terminal 30b with the duration of the VD rendering.

That is, in the frame F4, four images are transmitted as the texture information Tb. Then, in the frame F5, six images are transmitted as the texture information Tb. Furthermore, in the frame F6 and subsequent frames, eight images are transmitted as the texture information Tb. Thus, the amount of information transmitted increases according to the duration of the VD rendering, and the texture quality when the VD rendering is performed is further improved.

As described above, in the two embodiments according to the present disclosure, the various observation conditions based on the operation instruction given by the user (change speed of observation direction, viewing angle, distance between 3D model and viewpoint position, and distance between 3D model and gazing point) are described, but the various observation conditions used in the description can be used regardless of the first embodiment and the second embodiment. Further, a plurality of observation conditions may be used simultaneously.

### (3. Third embodiment)

In the information processing apparatus of the present disclosure, the data structure expressing the 3D model 90M is not limited to those configured by the mesh information M and the texture information T (Ta, Tb) described above. An example of another data format will be described below.

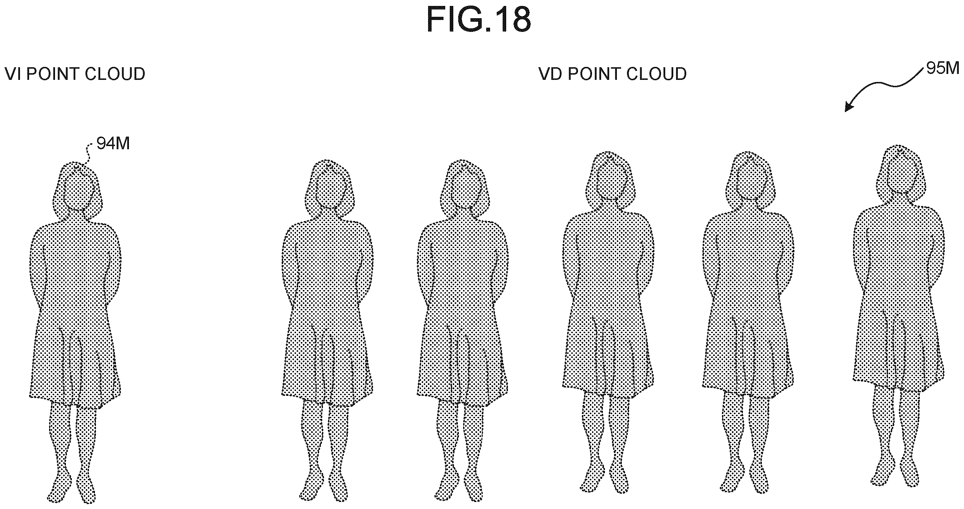

FIG. 18 is a diagram explaining an example of a data structure of a 3D model included in an information processing system of a third embodiment. That is, the third embodiment is an example in which point cloud information (point cloud) is used as the format of expressing the 3D model 90M.

The point cloud describes the subject 90 as a plurality of pieces of point cloud information forming the surface of the subject. That is, in FIG. 18, a 3D model 94M is described as a collection of points having color information and luminance information. By having such a data structure, the 3D model 94M itself has shape information and texture information. Note that the 3D model 94M is data not dependent on the viewpoint position and is equivalent to the texture information Ta described above. Hereafter, the 3D model 94M will be called the VI point cloud. Note that the 3D model 94M is an example of the 3D object in the present disclosure.

On the other hand, a 3D model 95M illustrated in FIG. 18 is a 3D model obtained by observing the subject 90 from multiple directions. Then, each of the 3D models has a point cloud data format. Therefore, the 3D model 95M illustrated in FIG. 18 is equivalent to the texture information Tb described above. Hereafter, the 3D model 95M will be called the VD point cloud. Note that the 3D model 95M is an example of the 3D object in the present disclosure.

The information processing systems 10a and 10b described above can realize the same functions as those of the embodiments described above by using the 3D models 94M and 95M having such a data structure, that is, the VI point cloud and the VD point cloud.

### (4. Fourth embodiment)

When a video containing a 3D object is streamed via, for example, the Internet, the reproducible bit rate and number of streams are limited by the network bandwidth or the decoding performance of the reproduction apparatus. Therefore, when displaying a video containing a plurality of 3D objects, it is necessary to reduce the quality of the texture. Therefore, when approaching the video of the 3D object displayed on the reproduction apparatus, there is a possibility that the reality of the 3D object is reduced due to insufficient mesh accuracy and texture roughness. In order to solve such a problem, an information processing system 10c of the fourth embodiment of the present disclosure includes a server apparatus 20c and a mobile terminal 30c, which is an example of the information processing apparatus. The server apparatus 20c transmits high image quality texture information (for example, texture information Tb) to the mobile terminal 30c within a bit rate range in which a high image quality video can be transmitted. On the other hand, when the bit rate that can be transmitted is exceeded, low image quality texture information (for example, texture information Ta) is transmitted. The mobile terminal 30c selects the texture information T that can be transmitted in real time from the server apparatus 20c on the basis of the specifications of the 3D object to be rendered, and transmits the texture information T to the server apparatus 20c. Then, the mobile terminal 30c performs rendering using the texture information T received from the server apparatus 20c and generates a video containing the 3D object. Note that a video containing the 3D object is hereinafter referred to as a volumetric video. Note that the mobile terminal 30c is, for example, a smartphone, an HMD, or the like.

In the present embodiment, the texture information T used when drawing a 3D object is, for example, layered into low image quality, medium image quality, and high image quality depending on the image quality of the texture. The low image quality texture corresponds to, for example, the texture information Ta. The medium image quality texture and the high image quality texture correspond to, for example, the texture information Tb. The high image quality texture is such that the same texture information Tb is described with a larger number of pixels with respect to the medium image quality texture.

The mobile terminal 30c selects the texture information T having the highest possible image quality for drawing each 3D object on the condition that the 3D model necessary for rendering can be transmitted in real time. At that time, one of the high image quality texture, the medium image quality texture, and the low image quality texture is selected for each object or each part of the object.

### [4-1. Description of functional configuration of information processing system]

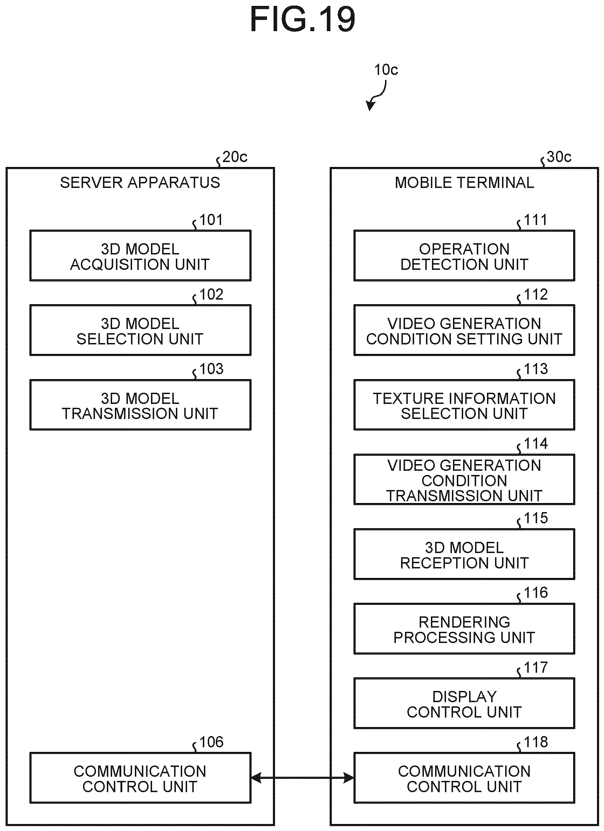

The functional configurations of the server apparatus 20c and the mobile terminal 30c included in the information processing system 10c will be described with reference to FIG. 19. FIG. 19 is a functional block diagram illustrating an example of a functional configuration of an information processing system of a fourth embodiment.

The server apparatus 20c includes a 3D model acquisition unit 101, a 3D model selection unit 102, a 3D model transmission unit 103, and a communication control unit 106.

The 3D model acquisition unit 101 acquires the 3D model 90M of the subject 90. Note that the 3D model 90M of the subject 90 may be stored in advance in the server apparatus 20c, or may be stored in another server apparatus, which is not illustrated in FIG. 19, connected to the server apparatus 20c. Further, the server apparatus 20c itself may have a function of generating the 3D model 90M of the subject 90.

The 3D model selection unit 102 selects the mesh information M and the texture information T according to the result selected by a texture information selection unit 113, which will be described below, of the mobile terminal 30c, from the 3D model 90M of the subject 90 acquired by the 3D model acquisition unit 101.

A 3D model transmission unit 104 transmits the mesh information M and the texture information T of the 3D model 90M selected by the 3D model selection unit 102 to the mobile terminal 30c. Note that the mesh information M and the texture information T are transmitted in a state of being encoded in a predetermined format.

The communication control unit 106 controls communication between the server apparatus 20c and the mobile terminal 30c.

Further, the mobile terminal 30c includes an operation detection unit 111, a video generation condition setting unit 112, the texture information selection unit 113, a video generation condition transmission unit 114, a 3D model reception unit 115, a rendering processing unit 116, a display control unit 117, and a communication control unit 118.

The operation detection unit 111 detects the user's operation instruction with respect to the mobile terminal 30c.

The video generation condition setting unit 112 sets generation conditions for a volumetric video to be generated. Specifically, the video viewer (user) possessing the mobile terminal 30c sets video generation conditions such as the type of an object to be displayed in the volumetric video, object arrangement conditions, and the viewpoint position for observing the video.

The texture information selection unit 113 decides the texture information T to be used when the mobile terminal 30c performs the rendering processing of the object set by the video generation condition setting unit 112. Note that the texture information selection unit 113 is an example of the decision unit in the present disclosure. The texture information selection unit 113 decides whether to perform the rendering processing using the low image quality texture information Ta, the rendering processing using the medium image quality texture information Tb, or the rendering processing using the high image quality texture information Tb. Specifically, the texture information selection unit 113 decides whether to use the low image quality texture information Ta or the high image quality texture information Tb to draw the object on the basis of the information related to the selected object, the size of the object on the screen, and the transfer speed when the texture information Tb is transferred to the mobile terminal 30c, which is a reproduction apparatus. Note that the information related to the selected object is described in, for example, an extensible markup language (XML) file and stored in the server apparatus 20c. The mobile terminal 30c reads this XML file and acquires the information related to the object. Further, the XML file may be stored in the mobile terminal 30c in advance.

The video generation condition transmission unit 114 transmits the information of the object selected by the video generation condition setting unit 112 and the texture information T selected by the texture information selection unit 113 to the server apparatus 20c.

The 3D model reception unit 115 receives the mesh information M and the texture information T transmitted by the server apparatus 20c.

The rendering processing unit 116 renders the 3D model using the mesh information M and the texture information received by the 3D model reception unit 115, and reconstructs the 3D model.

The display control unit 117 displays the rendered volumetric video on the display of the mobile terminal 30c.

The communication control unit 118 controls communication between the mobile terminal 30c and the server apparatus 20c.

### [4-2. Description of processing performed by information processing system]

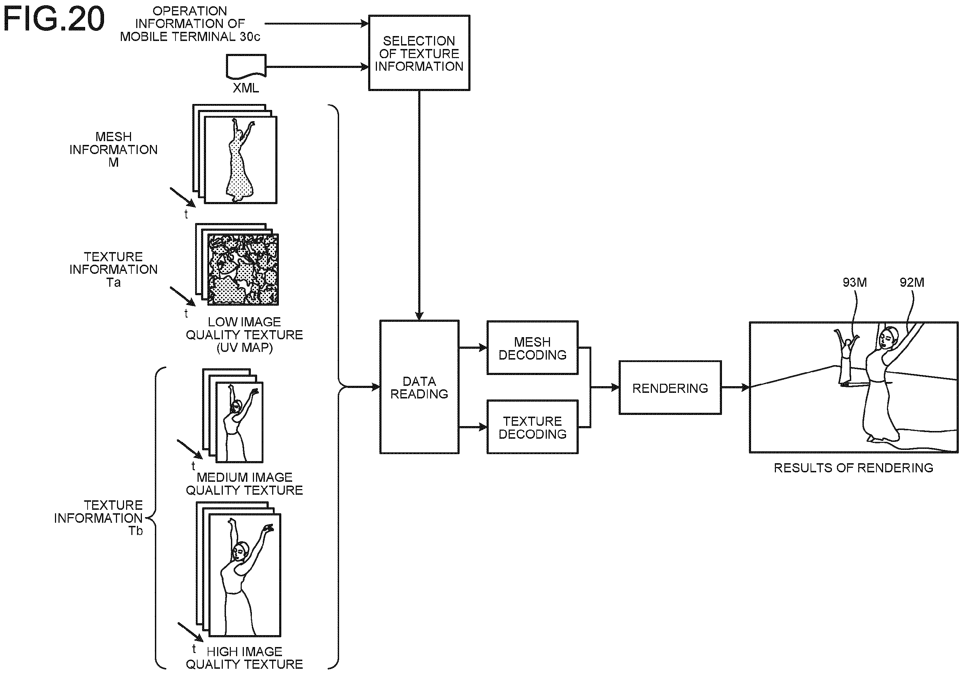

Next, the flow of a series of processing until the information processing system 10c performs rendering of a 3D object will be described with reference to FIG. 20. FIG. 20 is a diagram illustrating an example of a flow of processing in which the information processing system of the fourth embodiment performs rendering of a 3D object.

As illustrated in FIG. 20, the mobile terminal 30c acquires the operation information, which is made by the mobile terminal 30c, for setting the volumetric video generation conditions. Further, the server apparatus 20c receives the operation information made by the mobile terminal 30c and reads the specifications of the 3D object to be rendered, which is described in, for example, an extensible markup language (XML) file.

The texture information selection unit 113 selects the texture information T to be used at the time of rendering on the basis of the volumetric video generation conditions and the specifications of the 3D object to be rendered. At this time, for example, it is decided whether to use the texture information Ta (low image quality texture) or the texture information Tb (medium image quality texture and high image quality texture) on the basis of the number of pixels per unit length (for example, 1m) on the screen for each volumetric video to be generated.

Note that when the communication capacity (bit rate) between the server apparatus 20c and the mobile terminal 30c is limited, the server apparatus 20c transmits the high image quality texture or the medium image quality texture within the capacity range to the mobile terminal 30c, and transmits only the low image quality texture when the bit rate frame is exceeded. In general, a plurality of 3D objects is drawn in a volumetric video. Then, the larger the size of the object on the screen, the more eye-catching the user is, and it is desirable to perform drawing using the high image quality texture. Therefore, it is desirable to select the texture information T to be used in order from the object having the largest size (the object having the largest number of pixels per unit length on the screen).

The texture information selected by the texture information selection unit 113 is transmitted to the server apparatus 20c, and the 3D model selection unit 102 reads the mesh information M and the selected texture information T (one of low image quality texture information Ta, medium image quality texture information Tb, and high image quality texture information Tb) for each 3D object to be drawn.

Then, the 3D model transmission unit 103 transmits the 3D model including the texture information T selected by the texture information selection unit 113 to the mobile terminal 30c.

The 3D model reception unit 115 of the mobile terminal 30c receives the 3D model from the server apparatus 20c. Then, the rendering processing unit 116 decodes the mesh information M and the texture information T of the received 3D model, and renders the volumetric video. In the example of FIG. 20, the 3D models 92M and 93M are drawn.

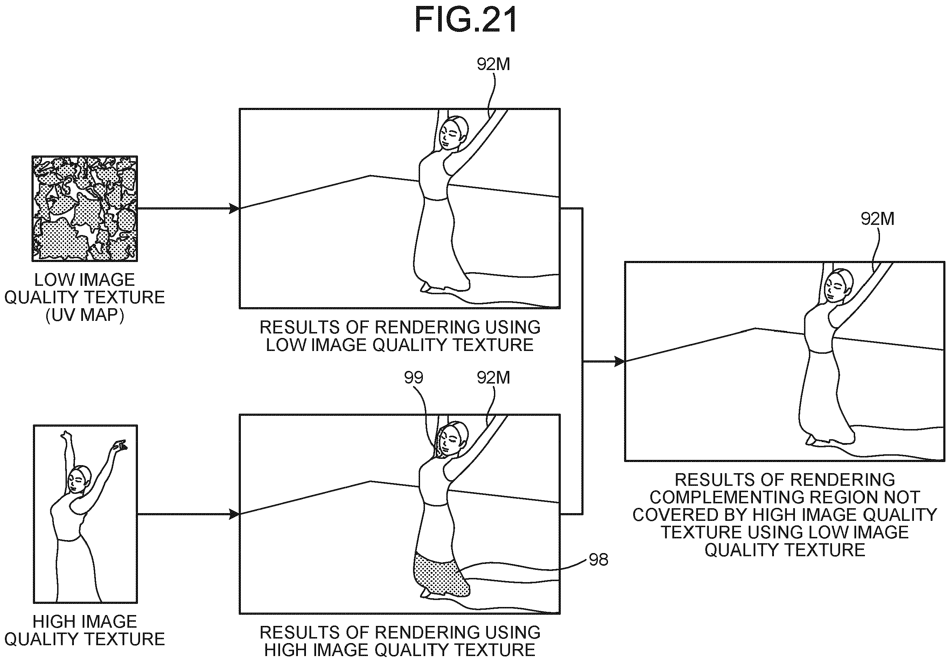

Next, an example of drawing a part of a 3D object with a low image quality texture will be described with reference to FIG. 21. FIG. 21 is a diagram illustrating an example in which one 3D object is drawn with different pieces of texture information T.

FIG. 21 illustrates an example of drawing the 3D model 92M. When the 3D model 92M is drawn with a high image quality texture, when the bit rate frame is exceeded, a lower region 98 of the 3D model 92M is drawn using only the low image quality texture. At this time, the rendering processing unit 116 may read the information of the low image quality texture (UV map) corresponding to the region 98 to perform drawing by referring to the mesh information M corresponding to the region 98. Further, as illustrated in FIG. 21, rendering using the low image quality texture is performed in advance, and by referring to the result of the low image quality rendering at the coordinate position corresponding to the region 98, the result of the drawing performed halfway may be complemented using the high image quality texture.

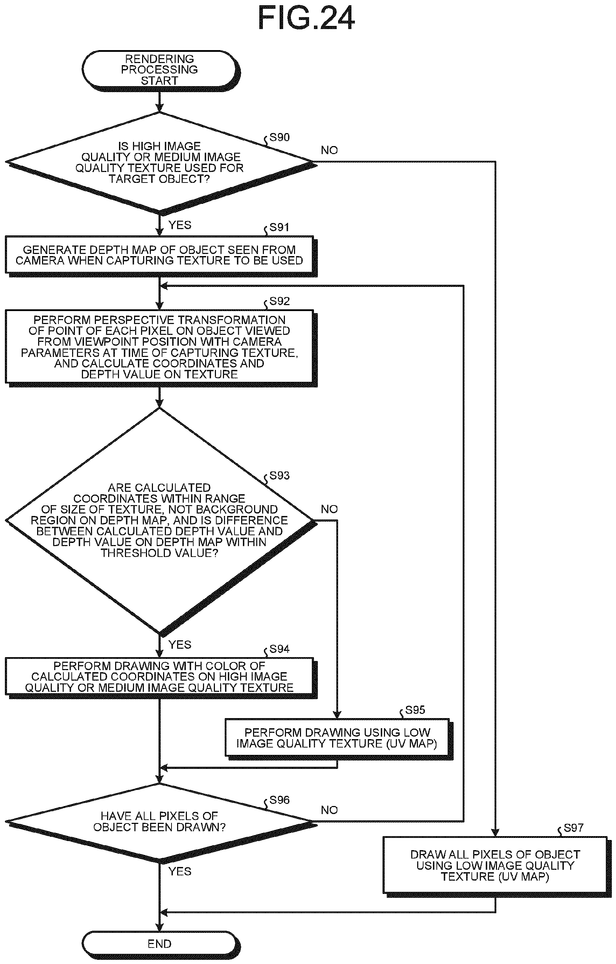

Further, when the 3D model 92M illustrated in FIG. 21 is drawn using a high image quality texture, the camera position and direction when the texture information Tb is captured do not necessarily match the observation position and observation direction of the volumetric video, and therefore a region where the high image quality texture information Tb is missing can be generated. For example, a region 99 illustrated in FIG. 21 is such an example. In such a case, the rendering processing unit 116 complements the region where the information is missing by using the low image quality texture information Ta. Note that a specific method for determining whether or not the high image quality texture information Tb is missing will be described below (see Step S93 in FIG. 24).

### [4-3. Description of flow of processing performed by information processing system]

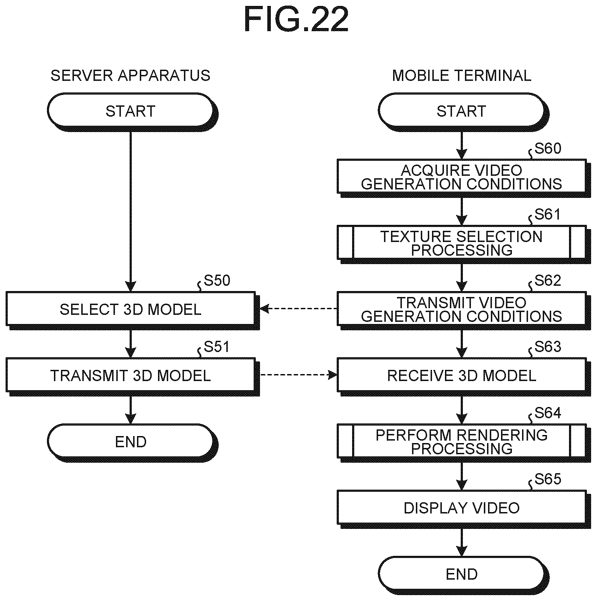

Next, the flow of processing performed by the information processing system 10c will be described with reference to FIG. 22. FIG. 22 is a flowchart illustrating an example of a flow of processing performed by the information processing system of the fourth embodiment.

First, a flow of processing performed by the server apparatus 20c will be described. The 3D model selection unit 102 selects a 3D model (mesh information M and texture information T) transmitted to the mobile terminal 30c from the 3D model 90M of the subject acquired by the 3D model acquisition unit 101 on the basis of the video generation conditions set in the mobile terminal 30c (Step S50).

The 3D model transmission unit 103 transmits the 3D model selected by the 3D model selection unit 102 to the mobile terminal 30c (Step S51). Then, the server apparatus 20c ends the processing of FIG. 22.

Next, the flow of processing performed by the mobile terminal 30c will be described. The operation detection unit 111 acquires the volumetric video generation conditions input by the user. Then, the video generation condition setting unit 112 sets generation conditions for the volumetric video to be generated (Step S60).

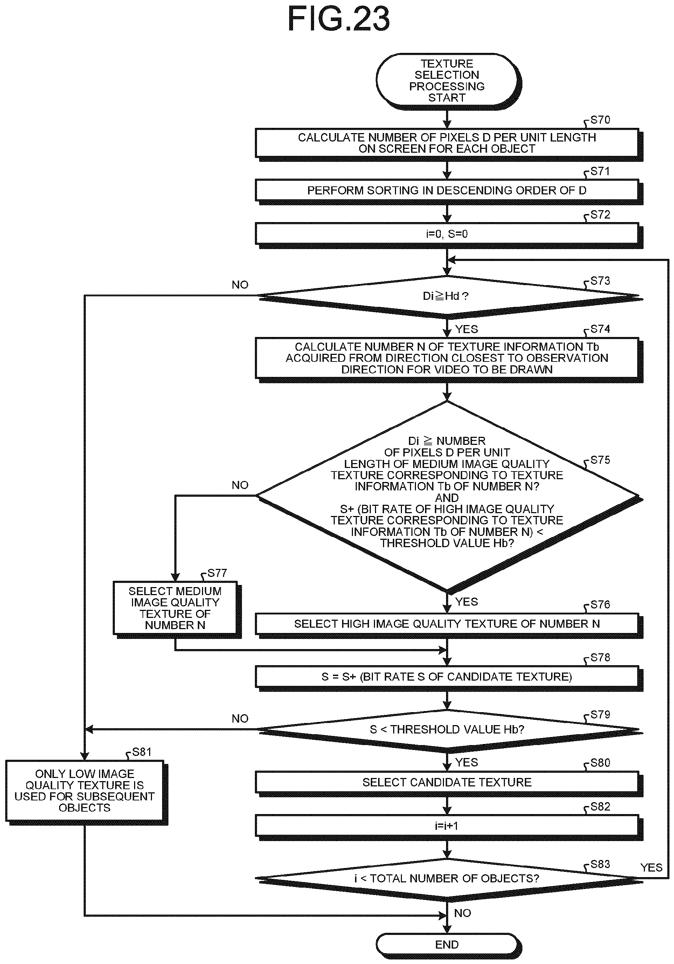

The texture information selection unit 113 performs texture selection processing for deciding the texture information T to be used when drawing the 3D model 90M on the basis of the video generation conditions set in Step S60 (Step S61). Note that the details of the processing performed in Step S61 will be described below (see FIG. 23) .

The video generation condition transmission unit 114 transmits the video generation conditions set by the video generation condition setting unit 112 and the texture information selection unit 113 to the server apparatus 20c (Step S62).

The 3D model reception unit 115 receives the 3D model transmitted by the server apparatus 20c (Step S63).

The rendering processing unit 116 draws the 3D model 90M using the information received from the server apparatus 20c (Step S64). Note that the details of the processing performed in Step S64 will be described below (see FIG. 24).

The display control unit 117 displays the volumetric video drawn in Step S64 on the display of the mobile terminal 30c (Step S65). Then, the mobile terminal 30c ends the processing of FIG. 22.

### [4-4. Description of flow of texture selection processing performed by mobile terminal]

Next, the flow of the texture selection processing performed by the mobile terminal 30c will be described with reference to FIG. 23. FIG. 23 is a flowchart illustrating an example of a flow of texture selection processing performed by a mobile terminal of the fourth embodiment.

The texture information selection unit 113 calculates the number of pixels D per unit length on the screen for each 3D object (Step S70) .

The texture information selection unit 113 sorts the 3D objects in descending order of the number of pixels D (Step S71).

The texture information selection unit 113 sets both object number i that uniquely identifies each 3D object and total bit rate S of the medium image quality texture and the high image quality texture to zero in order to perform the subsequent processing comprehensively (Step S72).

The texture information selection unit 113 determines whether the number of pixels Di per unit length of the 3D object having the object number i on the screen is equal to or greater than a preset threshold value Hd (Step S73). When it is determined that the number of pixels Di is equal to or greater than the threshold value Hd (Step S73: Yes), the processing proceeds to Step S74. On the other hand, when it is not determined that the number of pixels Di is equal to or greater than the threshold value Hd (Step S73: No), the processing proceeds to Step S81.

When Yes is determined in Step S73, the texture information selection unit 113 acquires the number N of the texture information Tb acquired from the direction closest to the observation direction of the volumetric video to be drawn (Step S74).

The texture information selection unit 113 determines whether the number of pixels Di is larger than the number of pixels D per unit length of the medium image quality texture corresponding to the texture information Tb of the number N, and the sum of the total bit rate S up to that point and the bit rate of the high image quality texture corresponding to the texture information Tb of the number N is smaller than a preset threshold value Hb (Step S75). When it is determined that the condition is satisfied (Step S75: Yes), the processing proceeds to Step S76, and when it is not determined that the condition is satisfied (Step S75: No), the processing proceeds to Step S77.

When Yes is determined in Step S75, the texture information selection unit 113 selects the high image quality texture of the number N (Step S76). Then, the processing proceeds to Step S78.

On the other hand, when No is determined in Step S75, the texture information selection unit 113 selects the medium image quality texture of the number N (Step S77). Then, the processing proceeds to Step S78.

Following Step S76 or Step S77, the texture information selection unit 113 adds the total bit rate S up to that point to the bit rate of the texture selected in Step S76 or Step S77 to obtain a new total bit rate S (Step S78).

The texture information selection unit 113 determines whether the total bit rate S updated in Step S78 is smaller than the threshold value Hb (Step S79). When it is determined that the total bit rate S is smaller than the threshold value Hb (Step S79: Yes), the processing proceeds to Step S80. On the other hand, when it is not determined that the total bit rate S is smaller than the threshold value Hb (Step S79: No), the processing proceeds to Step S81.

When Yes is determined in Step S70, the texture information selection unit 113 decides to perform rendering using the texture selected in Step S76 or Step S77 (Step S80).

Subsequently, the texture information selection unit 113 increments the object number i (Step S82).

The texture information selection unit 113 determines whether the object number i is smaller than the total number of objects rendered on one screen (Step S83). When it is determined that the object number i is smaller than the total number of objects (Step S83: Yes), the processing returns to Step S73. On the other hand, when it is not determined that the object number i is smaller than the total number of objects (Step S83: No), the texture information selection unit 113 ends the processing of FIG. 23.

Note that when No is determined in Step S73 or No is determined in Step S79, the texture information selection unit 113 decides to render all subsequent objects using only the low image quality texture (Step S81). Then, the texture information selection unit 113 ends the processing of FIG. 23.

### [4-5. Description of flow of rendering processing performed by mobile terminal]

Next, the flow of the rendering processing performed by the mobile terminal 30c will be described with reference to FIG. 24. FIG. 24 is a flowchart illustrating an example of a flow of rendering processing performed by the mobile terminal of the fourth embodiment.

The rendering processing unit 116 determines whether the object to be rendered uses a high image quality or medium image quality texture (Step S90). When it is determined that the high image quality or medium image quality texture is used (Step S90: Yes), the processing proceeds to Step S91. On the other hand, when it is not determined that the high image quality or medium image quality texture is used (Step S90: No), the processing proceeds to Step S97.

When Yes is determined in Step S90, the rendering processing unit 116 generates a depth map of the object seen from the camera when the texture to be used is captured (Step S91). Note that the depth map is a map indicating the depth information Dp of the object.

The rendering processing unit 116 performs perspective transformation of a point of each pixel on the object viewed from the viewpoint position with camera parameters at the time of capturing the texture, and calculates the coordinates and depth value on the texture (Step S92).

The rendering processing unit 116 determines whether the coordinates calculated in Step S92 are within the range of the size of the texture, not the background region on the depth map, and a difference between the depth value calculated in Step S92 and the depth value on the depth map is within a predetermined threshold value (Step S93). When it is determined that the conditions are satisfied (Step S93: Yes), the processing proceeds to Step S94. On the other hand, when it is not determined that the conditions are satisfied (Step S93: No), the processing proceeds to Step S95. Note that, in Step S93, it is determined whether or not the region is visible from the camera when capturing the high image quality texture information Tb. Then, when No is determined in Step S93, it is determined that the region lacks the high image quality texture information Tb.

When Yes is determined in Step S93, the rendering processing unit 116 performs rendering with the color corresponding to the coordinates calculated in Step S92 on the high image quality or medium image quality texture (Step S94). Then, the processing proceeds to Step S96.

On the other hand, when No is determined in Step S93, the rendering processing unit 116 performs rendering using the low image quality texture (UV map) (Step S95). Then, the processing proceeds to Step S96.

Following Step S94 or Step S95, the rendering processing unit 116 determines whether all the pixels of the object have been rendered (Step S96). When it is determined that all the pixels of the object have been rendered (Step S96: Yes), the rendering processing unit 116 ends the processing of FIG. 24. On the other hand, when it is not determined that all the pixels of the object have been rendered (Step S96: No), the processing returns to Step S92.

Note that when No is determined in Step S90, the rendering processing unit 116 renders all the pixels of the object using the low image quality texture (UV map) (Step S97). Then, the rendering processing unit 116 ends the processing of FIG. 24.

### [4-6. Effect of the fourth embodiment]

As described above, with the mobile terminal 30c (information processing apparatus) of the fourth embodiment, the texture information selection unit 113 (decision unit) decides whether to use the texture information Ta (first texture information) or the texture information Tb (second texture information) to draw the 3D object on the basis of the size of the 3D object on the screen and the transfer speed when the texture information T is transferred to the mobile terminal 30c (reproduction apparatus).

Thus, when streaming reproduction of the volumetric video is performed, the texture information T to be used for rendering can be selected so as to fit within the number of reproducible streams.

Further, in the mobile terminal 30c (information processing apparatus) of the fourth embodiment, the rendering processing unit 116 sets the number of pixels D per unit length of the 3D object on the screen as the size of the 3D object on the screen.

Thus, the texture information T can be decided by a simple scale.

Further, in the mobile terminal 30c (information processing apparatus) of the fourth embodiment, when a plurality of 3D objects is drawn, the rendering processing unit 116 draws the 3D objects using the texture information Tb for each 3D object when the transfer speed of the texture information Tb (second texture information) according to the size of the 3D object is added and the result of the addition falls under a predetermined threshold value. Further, when the result of the addition is equal to or higher than the predetermined threshold value, the subsequent 3D objects are drawn using the texture information Ta (first texture information).

Thus, it is possible to deliver a volumetric video with the highest possible image quality according to the performance of the distribution environment.

Further, in the mobile terminal 30c (information processing apparatus) of the fourth embodiment, when rendering of the 3D object is performed, the rendering processing unit 116 uses the texture information Tb to perform rendering of a region where when the transfer speed of the texture information Tb (second texture information) according to the size of the 3D object is added, the result of the addition falls under a predetermined threshold value. Further, the region where the result of the addition is equal to or higher than the predetermined threshold value is rendered using the texture information Ta (first texture information).

Thus, even within one object, it is possible to deliver a volumetric video with the highest possible image quality according to the performance of the distribution environment.

Further, in the mobile terminal 30c (information processing apparatus) of the fourth embodiment, when rendering of a plurality of 3D objects is performed, the rendering processing unit 116 uses the texture information Tb to perform rendering of a region of the objects where the texture information Tb (second texture information) can be obtained and uses the texture information Ta (first texture information) to perform rendering of a region lacking the texture information Tb.

Thus, it is possible to generate a volumetric video without lacking by complementing the region in the objects where the high image quality texture cannot be obtained by using the low image quality texture.

### (5. Fifth embodiment)

When a video containing a 3D object is reproduced, there is a need to draw only a specific part of the 3D object with high image quality on which the user (viewer) is hoped to focus on or the user wants to focus on. An information processing system 10d (not illustrated) of the fifth embodiment of the present disclosure meets such need, and, for example, when the 3D object is a person, performs rendering of only the face and clothing of the person with a high image quality texture (for example, texture information Ta).

### [5-1. Description of functional configuration of information processing system]

The information processing system 10d of the fifth embodiment includes a server apparatus 20d and a mobile terminal 30d having the same functional configurations as the server apparatus 20c and the mobile terminal 30c described in the fourth embodiment. Note that the mobile terminal 30d is an example of the information processing apparatus in the present disclosure.

The owner of the mobile terminal 30d, which is an observer of the volumetric video, inputs requests on the mobile terminal 30d, for example, "I want all the faces of persons to be drawn with high image quality", "I want the face of a specific person to be drawn with high image quality", and "I want the clothes worn by the person to be drawn with high image quality". The operation detection unit 111 (see FIG. 19) of the mobile terminal 30d detects the input of the requests and transmits it to the server apparatus 20d. Then, the 3D model selection unit 102 of the server apparatus 20d selects the texture information T necessary for drawing on the basis of the information received from the mobile terminal 30d that a specific region of the 3D object is drawn with high image quality. At that time, the texture information Tb is selected for the region designated to be drawn with high image quality. The 3D model including the selected texture information T is transmitted to the mobile terminal 30d. Then, the mobile terminal 30d performs rendering on the basis of the received 3D model and reconstructs the 3D model.

### [5-2. Description of processing performed by information processing system]

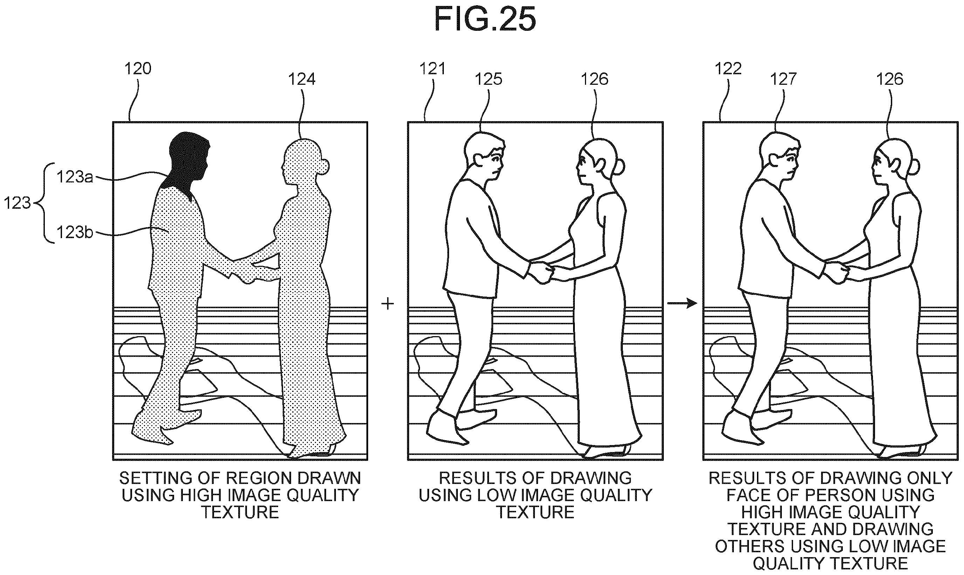

Next, the operation of the information processing system 10d of the fifth embodiment will be described with reference to FIG. 25. FIG. 25 is a diagram explaining an operation of an information processing system of a fifth embodiment.

FIG. 25 is an example of generating a volumetric video containing two 3D objects, that is, a person 123 and a person 124. Then, it is assumed that a request to render the face of the person 123 with high image quality has been made from the mobile terminal 30d to the server apparatus 20d.

At this time, the 3D model selection unit 102 (see FIG. 19) of the server apparatus 20d divides the 3D model of the person 123 into a face region 123a and a non-face region 123b (image 120). Note that it is assumed that the mesh information M of the person 123 is given in advance an identification symbol indicating that it is a face region. Then, the 3D model selection unit 102 acquires, from the mesh information M of the person 123, a region given an identification symbol indicating that it is a face region as the face region 123a.

Next, the 3D model selection unit 102 of the server apparatus 20d selects the high image quality texture information Tb corresponding to the face region 123a of the person 123. Then, the 3D model transmission unit 103 transmits a 3D model including the low image quality texture information Ta of the whole bodies of the persons 123 and 124 and the high image quality texture information Tb corresponding to the face region 123a of the person 123 to the mobile terminal 30d.

The 3D model reception unit 115 of the mobile terminal 30d receives the 3D model transmitted from the server apparatus 20d. Then, the rendering processing unit 116 first draws both the persons 123 and 124 using the low image quality texture information Ta. Thus, persons 125 and 126 illustrated in an image 121 of FIG. 25 are drawn.

Next, the rendering processing unit 116 overwrites the high image quality texture information Tb on the face region of the person 125 of the image 121. Thus, a person 127 illustrated in an image 122 of FIG. 25 is drawn.

Thus, a volumetric video of the person 127 is generated in which the face region 123a is drawn using the high image quality texture information Tb and the non-face region 123b is drawn using the low image quality texture information Ta.

Note that, as described above, an important region such as a face or clothes, may be drawn using low image quality texture information Ta in advance and then the corresponding region may be overwritten using high image quality texture information Tb, or may be drawn using different texture information for each region using the texture information Tb and the texture information Ta.

### [5-3. Description of flow of processing performed by information processing system]

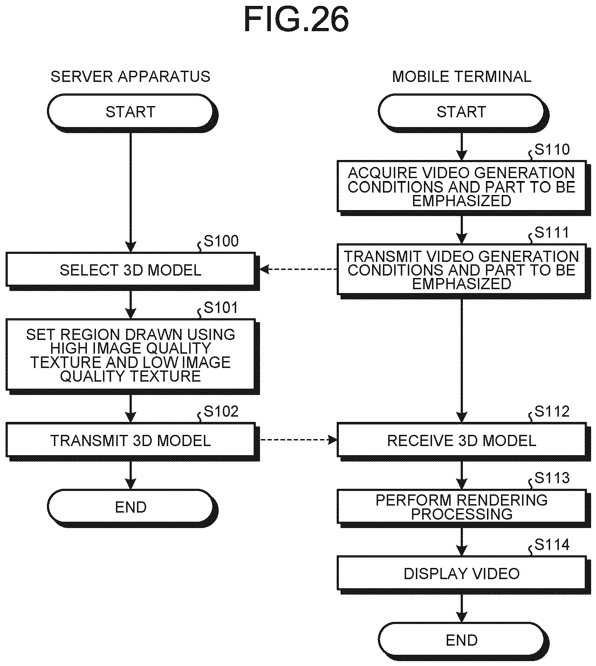

Next, the flow of processing performed by the information processing system 10d will be described with reference to FIG. 26. FIG. 26 is a flowchart illustrating an example of a flow of processing performed by the information processing system of the fifth embodiment.

First, a flow of processing performed by the server apparatus 20d will be described. The 3D model selection unit 102 receives information of a part to be emphasized at the time of rendering from the mobile terminal 30d, and acquires the 3D model of the corresponding object from the 3D models included in the 3D model acquisition unit 101 (Step S100).

The 3D model selection unit 102 sets regions to be drawn using the high image quality texture information Tb and the low image quality texture information Ta on the basis of the information of the part to be emphasized at the time of rendering received from the mobile terminal 30d (Step S101).

The 3D model transmission unit 103 transmits the 3D model including the high image quality texture information Tb and the low image quality texture information Ta corresponding to the region selected by the 3D model selection unit 102 to the mobile terminal 30d (Step S102). Then, the server apparatus 20d ends the processing of FIG. 26.

Next, the flow of processing performed by the mobile terminal 30d will be described. The video generation condition setting unit 112 accepts video generation conditions based on the user's operation detected by the operation detection unit 111. Further, the texture information selection unit 113 accepts the designation of the part to be emphasized in the object, and sets that a specific region of the 3D object is drawn using the texture information Tb (second texture information) (Step S110).

The video generation condition transmission unit 114 transmits the information designated in Step S110 to the server apparatus 20d (Step S111).

The 3D model reception unit 115 receives the 3D model transmitted by the server apparatus 20d (Step S112).

The rendering processing unit 116 draws all objects using the low image quality texture information Ta. Then, furthermore, the high image quality texture information Tb is overwritten in the region instructed to be emphasized (Step S113).

The display control unit 117 displays the volumetric video drawn in Step S113 on the display of the mobile terminal 30d (Step S114). Then, the mobile terminal 30d ends the processing of FIG. 26.

### [5-4. Effect of the fifth embodiment]

As described above, with the mobile terminal 30d (information processing apparatus) of the fifth embodiment, the texture information selection unit 113 (decision unit) decides to draw a specific region of the 3D object using the texture information Tb (second texture information).

Thus, it is possible to emphasize the specific part by rendering the specific part in the 3D object with high image quality.

Further, with the mobile terminal 30d (information processing apparatus) of the fifth embodiment, when the 3D object is a person, the texture information selection unit 113 (decision unit) decides to draw the face of the person using the texture information Tb (second texture information).

Thus, it is possible to emphasize a specific part of a 3D object that the viewer is particularly likely to focus on by rendering the specific part with high image quality.

Note that the effects described in the present specification are merely examples and are not limitative, and there may be other effects. Further, the embodiment of the present disclosure is not limited to the above-described embodiments, and various changes can be made without departing from the gist of the present disclosure.

For example, the present disclosure can also have the configurations described below.
(1) An information processing apparatus comprising:
   a decision unit that decides whether to use first texture information expressing a surface of a 3D object in a first format or second texture information expressing the surface of the 3D object in a second format different from the first texture information to draw all or some of the 3D objects when drawing the 3D objects; and
   a drawing unit that draws the 3D object using shape information indicating a surface shape of the 3D object and texture information decided by the decision unit.
(2) An information processing apparatus comprising:
   a storage unit that stores shape information indicating a surface shape of a 3D object, first texture information expressing a surface of the 3D object in a first format, and texture information expressed with second texture information expressing the surface of the 3D object in a second format different from the first texture information;
   a decision unit that decides which texture information in texture information of a plurality of different formats stored by the storage unit to transmit to a drawing apparatus when observing the 3D object output from the drawing apparatus that draws the 3D object; and
   a transmission unit that transmits the shape information and the texture information decided by the decision unit to the drawing apparatus.
(3) The information processing apparatus according to (1) or (2), wherein
   the first texture information is texture information not dependent on a viewpoint position for observing the 3D object, and
   the second texture information is texture information dependent on the viewpoint position for observing the 3D object.
(4) The information processing apparatus according to any one of (1) to (3), wherein
   the decision unit decides whether to use the first texture information or the second texture information to draw the 3D object on the basis of a size of the 3D object on a screen and transfer speed when the texture information is transferred to a reproduction apparatus.
(5) The information processing apparatus according to (4), wherein
   the size is a number of pixels per unit length of the 3D object on the screen.
(6) The information processing apparatus according to any one of (1) to (5), wherein
   when drawing a plurality of 3D objects,
   the drawing unit adds the transfer speed of the second texture information according to the size of the 3D object for each of the 3D objects, and when a result of addition falls below a predetermined threshold value, draws the 3D object using the second texture information, and
   when the result of addition is equal to or greater than the predetermined threshold value, draws a subsequent 3D object using the first texture information.
(7) The information processing apparatus according to any one of (1) to (6), wherein
   when drawing the 3D object,
   the drawing unit adds the transfer speed of the second texture information according to the size of the 3D object, and draws a region where a result of addition falls below a predetermined threshold value using the second texture information, and
   draws a region where the result of addition is equal to or greater than the predetermined threshold value using the first texture information.
(8) The information processing apparatus according to any one of (1) to (7), wherein
   when drawing the 3D object,
   the drawing unit draws a region where the second texture information can be obtained within the 3D object using the second texture information, and
   complements a region lacking the second texture information using the first texture information.
(9) The information processing apparatus according to any one of (1) to (8), further comprising:
   a detection unit that detects an operation instruction given when observing the 3D object, wherein
   the decision unit decides the texture information when drawing the 3D object on the basis of the operation instruction detected by the detection unit.
(10) The information processing apparatus according to any one of (1) to (9), wherein
   the decision unit decides to draw a specific region of the 3D object using the second texture information.
(11) The information processing apparatus according to (10), wherein
   when the 3D object is a person, the decision unit decides to draw a face of the person using the second texture information.
(12) The information processing apparatus according to (9), wherein
   the operation instruction is an observation direction or a change in the observation direction of the 3D object.
(13) The information processing apparatus according to (9) or (12), wherein
   the operation instruction is a viewing angle when observing the 3D object.
(14) The information processing apparatus according to (9), (12) or (13), wherein
   the operation instruction is a distance between the 3D object and a viewpoint position when observing the 3D object.
(15) The information processing apparatus according to (9) or any one of (12) to (14), wherein
   when the operation instruction is a change in the observation direction of the 3D object, the decision unit selects texture information not dependent on a viewpoint position when a change speed of the observation direction is larger than a predetermined value and selects texture information dependent on the viewpoint position when the change speed is larger than the predetermined value.
(16) The information processing apparatus according to (9) or any one of (12) to (15), wherein
   when the operation instruction is a viewing angle when observing the 3D object, the decision unit selects texture information not dependent on a viewpoint position when the viewing angle is wider than a predetermined value and selects texture information dependent on the viewpoint position when the viewing angle is narrower than the predetermined value.
(17) The information processing apparatus according to (9) or any one of (12) to (16), wherein
   when the operation instruction is a distance between the 3D object and the viewpoint position when observing the 3D object, the decision unit selects texture information not dependent on the viewpoint position when the distance is larger than a predetermined value and selects texture information dependent on the viewpoint position when the distance is equal to or less than the predetermined value.
(18) The information processing apparatus according to (9) or any one of (12) to (17), wherein
   when the operation instruction is the observation direction when observing the 3D object, the decision unit selects texture information dependent on a viewpoint position when the 3D object is at a position within a predetermined distance from the observation direction and selects texture information not dependent on the viewpoint position when the 3D object is at a position farther than the predetermined distance from the observation direction.
(19) A 3D data generation method comprising:
   a decision step of deciding whether to use first texture information expressing a surface of a 3D object in a first format or second texture information expressing the surface of the 3D object in a second format different from the first texture information to reconstruct the 3D object for all or some of the 3D objects when drawing the 3D objects; and
   a 3D data generation step of reconstructing the 3D object using shape information indicating a surface shape of the 3D object and texture information decided in the decision step.
(20) A program causing a computer to function as:
   a decision unit that decides whether to use first texture information expressing a surface of a 3D object in a first format or second texture information expressing the surface of the 3D object in a second format different from the first texture information to draw all or some of the 3D objects when drawing the 3D objects; and
   a drawing unit that draws the 3D object using shape information indicating a surface shape of the 3D object and texture information decided by the decision unit.

### Reference Signs List

10a, 10b, 10c, 10d INFORMATION PROCESSING SYSTEM
20a, 20c, 20d SERVER APPARATUS
20b SERVER APPARATUS (INFORMATION PROCESSING APPARATUS)
30a, 30d MOBILE TERMINAL (INFORMATION PROCESSING APPARATUS)
30b MOBILE TERMINAL (DRAWING APPARATUS)
30c MOBILE TERMINAL (INFORMATION PROCESSING APPARATUS, REPRODUCTION APPARATUS)
31, 91, 111 OPERATION DETECTION UNIT (DETECTION UNIT)
32 3D MODEL ACQUISITION UNIT
33, 113 TEXTURE INFORMATION SELECTION UNIT (DECISION UNIT)
34, 116 RENDERING PROCESSING UNIT (DRAWING UNIT)
83 3D MODEL STORAGE UNIT (STORAGE UNIT)
84 OPERATION INSTRUCTION DETECTION UNIT (DETECTION UNIT)
86 TRANSMISSION INFORMATION SELECTION UNIT (DECISION UNIT)
87 3D MODEL TRANSMISSION UNIT (TRANSMISSION UNIT)
90M, 92M, 93M, 94M, 95M 3D MODEL (3D OBJECT)
M MESH INFORMATION (SHAPE INFORMATION)
T TEXTURE INFORMATION
Ta TEXTURE INFORMATION (FIRST TEXTURE INFORMATION)
Tb TEXTURE INFORMATION (SECOND TEXTURE INFORMATION)

## Claims

1. An information processing apparatus comprising:
a decision unit that decides whether to use first texture information expressing a surface of a 3D object in a first format or second texture information expressing the surface of the 3D object in a second format different from the first texture information to draw all or some of the 3D objects when drawing the 3D objects; and
a drawing unit that draws the 3D object using shape information indicating a surface shape of the 3D object and texture information decided by the decision unit.

2. An information processing apparatus comprising:
a storage unit that stores shape information indicating a surface shape of a 3D object, first texture information expressing a surface of the 3D object in a first format, and texture information expressed with second texture information expressing the surface of the 3D object in a second format different from the first texture information;
a decision unit that decides which texture information in texture information of a plurality of different formats stored by the storage unit to transmit to a drawing apparatus when observing the 3D object output from the drawing apparatus that draws the 3D object; and
a transmission unit that transmits the shape information and the texture information decided by the decision unit to the drawing apparatus.

3. The information processing apparatus according to claim 1, wherein
the first texture information is texture information not dependent on a viewpoint position for observing the 3D object, and
the second texture information is texture information dependent on the viewpoint position for observing the 3D object.

4. The information processing apparatus according to claim 3, wherein
the decision unit decides whether to use the first texture information or the second texture information to draw the 3D object on the basis of a size of the 3D object on a screen and transfer speed when the texture information is transferred to a reproduction apparatus.

5. The information processing apparatus according to claim 4, wherein
the size is a number of pixels per unit length of the 3D object on the screen.

6. The information processing apparatus according to claim 4, wherein
when drawing a plurality of 3D objects,
the drawing unit adds the transfer speed of the second texture information according to the size of the 3D object for each of the 3D objects, and when a result of addition falls below a predetermined threshold value, draws the 3D object using the second texture information, and
when the result of addition is equal to or greater than the predetermined threshold value, draws a subsequent 3D object using the first texture information.

7. The information processing apparatus according to claim 4, wherein
when drawing the 3D object,
the drawing unit adds the transfer speed of the second texture information according to the size of the 3D object, and draws a region where a result of addition falls below a predetermined threshold value using the second texture information, and
draws a region where the result of addition is equal to or greater than the predetermined threshold value using the first texture information.

8. The information processing apparatus according to claim 4, wherein
when drawing the 3D object,
the drawing unit draws a region where the second texture information can be obtained within the 3D object using the second texture information, and
complements a region lacking the second texture information using the first texture information.

9. The information processing apparatus according to claim 1, further comprising:
a detection unit that detects an operation instruction given when observing the 3D object, wherein
the decision unit decides the texture information when drawing the 3D object on the basis of the operation instruction detected by the detection unit.

10. The information processing apparatus according to claim 3, wherein
the decision unit decides to draw a specific region of the 3D object using the second texture information.

11. The information processing apparatus according to claim 10, wherein
when the 3D object is a person, the decision unit decides to draw a face of the person using the second texture information.

12. The information processing apparatus according to claim 9, wherein
the operation instruction is an observation direction or a change in the observation direction of the 3D object.

13. The information processing apparatus according to claim 9, wherein
the operation instruction is a viewing angle when observing the 3D object.

14. The information processing apparatus according to claim 9, wherein
the operation instruction is a distance between the 3D object and a viewpoint position when observing the 3D object.

15. The information processing apparatus according to claim 12, wherein
when the operation instruction is a change in the observation direction of the 3D object, the decision unit selects texture information not dependent on a viewpoint position when a change speed of the observation direction is larger than a predetermined value and selects texture information dependent on the viewpoint position when the change speed is larger than the predetermined value.

16. The information processing apparatus according to claim 13, wherein
when the operation instruction is a viewing angle when observing the 3D object, the decision unit selects texture information not dependent on a viewpoint position when the viewing angle is wider than a predetermined value and selects texture information dependent on the viewpoint position when the viewing angle is narrower than the predetermined value.

17. The information processing apparatus according to claim 14, wherein
when the operation instruction is a distance between the 3D object and the viewpoint position when observing the 3D object, the decision unit selects texture information not dependent on the viewpoint position when the distance is larger than a predetermined value and selects texture information dependent on the viewpoint position when the distance is equal to or less than the predetermined value.

18. The information processing apparatus according to claim 12, wherein
when the operation instruction is the observation direction when observing the 3D object, the decision unit selects texture information dependent on a viewpoint position when the 3D object is at a position within a predetermined distance from the observation direction and selects texture information not dependent on the viewpoint position when the 3D object is at a position farther than the predetermined distance from the observation direction.

19. A 3D data generation method comprising:
a decision step of deciding whether to use first texture information expressing a surface of a 3D object in a first format or second texture information expressing the surface of the 3D object in a second format different from the first texture information to reconstruct the 3D object for all or some of the 3D objects when drawing the 3D objects; and
a 3D data generation step of reconstructing the 3D object using shape information indicating a surface shape of the 3D object and texture information decided in the decision step.

20. A program causing a computer to function as:
a decision unit that decides whether to use first texture information expressing a surface of a 3D object in a first format or second texture information expressing the surface of the 3D object in a second format different from the first texture information to draw all or some of the 3D objects when drawing the 3D objects; and
a drawing unit that draws the 3D object using shape information indicating a surface shape of the 3D object and texture information decided by the decision unit.
